# EUROPEAN PATENT SPECIFICATION

(11) **EP 3 190 157 B1**
(45) Date of publication and mention of the grant of the patent: **07.08.2019**
(21) Application number: 15838402.4
(22) Date of filing: 31.08.2015
(51) Int. Cl.: C08L 101/00, B01J 31/22, C08G 73/06, H01B 1/12, H01M 4/86, H01M 4/90, H01M 4/92, H01M 8/1018, H01M 4/96

(54) **CONDUCTIVE HYBRID MATERIAL INCLUDING COVALENT ORGANIC STRUCTURE**
LEITFÄHIGES HYBRIDMATERIAL MIT KOVALENTER ORGANISCHER STRUKTUR
MATERIAU HYBRIDE CONDUCTEUR COMPRENANT UNE STRUCTURE ORGANIQUE COVALENTE

(30) Priority: 01.09.2014 JP 2014177243
(43) Date of publication of application: 12.07.2017
(73) Proprietor: The University of Tokyo, Tokyo 113-8654 (JP); Panasonic Corporation, Kadoma-shi, Osaka 571-0051 (JP)
(72) Inventor: KAMIYA, Kazuhide, Bunkyo-ku Tokyo 1138654 (JP); NAKANISHI, Shuji, Bunkyo-ku Tokyo 1138654 (JP); HASHIMOTO, Kazuhito, Bunkyo-ku Tokyo 1138654 (JP); IWASE, Kazuyuki, Bunkyo-ku Tokyo 1138654 (JP); KAMAI, Ryo, Osaka-shi, Osaka 540-6207 (JP)
(74) Representative: Müller-Boré & Partner Patentanwälte PartG mbB
(86) International application number: PCT/JP2015/004423
(87) International publication number: WO 2016/035321

(56) References cited:
- WO-A1-2005/041330
- WO-A1-2011/122399
- WO-A1-2012/107032
- DE-A1-102011 010 659
- JP-A- 2006 202 688
- JP-A- 2012 525 246
- JP-A- 2013 159 588
- US-A1- 2012 130 071
- MAHBOOBEH NASR-ESFAHANI ET AL: "Copper Immobilized on Nanosilica Triazine Dendrimer (Cu(II)-TD@nSiO 2 )-Catalyzed Regioselective Synthesis of 1,4-Disubstituted 1,2,3-Triazoles and Bis- and Tris-Triazoles via a One-Pot Multicomponent Click Reaction", THE JOURNAL OF ORGANIC CHEMISTRY, vol. 79, no. 3, 7 February 2014 (2014-02-07), pages 1437-1443, XP055377670, ISSN: 0022-3263, DOI: 10.1021/jo402170n
- LILI CUI: 'Fabrication of iron phthalocyanine/ graphene micro/nanocomposite by solvothermally assisted PI-PI assembling method and its application for oxygen reduction reaction' ELECTROCHIMICA ACTA vol. 106, 2013, pages 272 - 278, XP028681729

## Description

### TECHNICAL FIELD

The present invention relates to an electrically conductive hybrid material including a covalent organic framework. Specifically, the present invention relates to an electrically conductive hybrid material including a covalent organic framework, the electrically conductive hybrid material being suitably usable as a catalyst material and an electrode material.

### BACKGROUND ART

A hydrogen oxidation reaction is important in an anode reaction of a H₂/O₂ fuel cell. Moreover, a hydrogen generation reaction that is a reverse reaction of the hydrogen oxidation reaction is important in a cathode reaction in an electrolytic bath. Then, in a case of promoting the hydrogen oxidation reaction and the hydrogen generation reaction in a variety of devices, a platinum group element such as platinum, palladium and iridium and a compound of the platinum group element, such as a platinum-ruthenium alloy, are widely used as catalysts.

H₂ → 2H⁺ + 2e⁻ (hydrogen oxidation reaction)

2H₂O + 2e⁻ → H₂ + 2OH⁻ (hydrogen generation reaction)

For example, Patent Literature 1 discloses that, as a hydrogen oxidation catalyst, there is used a catalyst, in which platinum particles are supported on a support such as carbon black powder, on a fuel electrode side of a polymer electrolyte fuel cell. Moreover, Patent Literature 2 discloses that a thin film, in which platinum is deposited on indium tin oxide (ITO) by a sputtering method, is used as a hydrogen generation catalyst. Then, Patent Literature 2 discloses that a hydrogen generation overvoltage of each of platinum and a nanostructure containing platinum is small.

Moreover, as elements other than the platinum group element that functions as such a hydrogen generation catalyst, there are known iron, nickel and selenium, each of which composes an active center of hydrogenase that is a hydrogen generation enzyme. Moreover, as the hydrogen generation catalyst, a compound of transition metal, such as a sulfide of molybdenum and a selenide thereof, is widely known. Moreover, Patent Literature 3 discloses that one, which is obtained by performing plasma spray coating of nickel oxide powder on a surface of a nickel-made expanded metal substrate and by coating the substrate with nickel oxide powder, is used as a catalyst of the hydrogen generation reaction.

Here, heretofore, it has been studied to apply a covalent organic framework as a functional porous material of a next-generation catalyst, catalyst support or the like. The covalent organic framework is a porous crystalline polymer having meso- or micro-sized pores, and is known to be capable of synthesized by a polycondensation reaction of boronic acid and the like (for example, refer to Patent Literature 4 and Non-Patent Literature 1). The covalent organic framework is a substance capable of striking a balance between high durability brought by being constructed of only covalent bonds and a high degree of design freedom, which is brought by the fact that a selection range of a framework is wide. Heretofore, it has been studied to utilize the covalent organic framework for adsorption, separation and the like of gas by using porous properties thereof, and meanwhile, in consideration of such characteristics as described above, application of the covalent organic framework as the functional porous material of the next-generation catalyst, catalyst support or the like has also attracted attention. Patent Literature 5 refers to non-platinum group metal complex catalysts with polycyclic triazine for fuel cells. Patent literature 6 discloses a platinum catalyst for fuel cells with a triazine polycyle. Non-Patent Literature 2 describes a copper catalyst with a triazine dendrimer for the synthesis of 1,4-disubstituted 1,2,3-triazoles.

### CITATION LIST

### PATENT LITERATURE

Patent Literature 1: Japanese Patent No. 4715842
Patent Literature 2: Japanese Patent No. 5663254
Patent Literature 3: Japanese Patent No. 5670600
Patent Literature 4: U.S. Unexamined Patent Application Publication No. 2006/0154807
Patent Literature 5: JP2006 202688
Patent Literature 6: DE 10 2011 010659

### NON-PATENT LITERATURE

Non-Patent Literature 1: Cote et al., Science 2005, 310, 1166
Non-Patent Literature 2: M. Nasr-Esfahani et al., The Journal of Organic Chemistry, vol. 79, no. 3, 7 February 2014, pages 1437-1443

### SUMMARY OF INVENTION

However, in the nickel compound or the like of Patent Literature 3, there is a problem that a hydrogen oxidation/hydrogen generation overvoltage thereof is 100 mV or more in comparison with platinum, resulting in that the nickel compound or the like consumes energy much more than platinum in the reaction. Meanwhile, the platinum group element in each of Patent Literature 1 and Patent Literature 2 is expensive though a hydrogen oxidation/hydrogen generation overvoltage thereof is extremely small, and accordingly, has been used while enhancing a specific surface area of platinum by being supported as nanoparticles with a diameter of 3 to 20 nm on an electrically conductive porous support. However, even in such a case, there has been a problem that cost of the covalent organic framework is increased since it is necessary to increase a supported amount of the metal in order to obtain a sufficient current density.

Moreover, the covalent organic framework itself is poor in electron conductivity. Therefore, up to now, it has been difficult to use the covalent organic framework for an electrode catalyst, a catalyst material which involves an electron transfer reaction, an electrode material of a secondary battery, and the like.

The present invention has been made in consideration of such problems as described above, which are inherent in the prior art. Then, it is an object of the present invention to provide a novel electrically conductive material. Moreover, it is another object of the present invention to provide an electrically conductive material having high catalytic activity even in a case where such a supported metal amount is reduced.

In order to solve the above-described problems, an electrically conductive hybrid material according to claims 1 to 10 is provided as a first aspect.

An electrode according to a second aspect of the present invention includes an electrically conductive hybrid material according to any one of claims 1 to 10.

A catalyst according to a third aspect of the present invention includes an electrically conductive hybrid material according to any one of claims 1 to 10.

A hydrogen generation catalyst according to a fourth aspect of the present invention contains a catalyst which includes an electrically conductive hybrid material according to any one of claims 1 to 10. Then, a platinum group element is coordinated to the covalent organic framework.

A hydrogen oxidation catalyst according to a fifth aspect of the present invention contains a catalyst which includes an electrically conductive hybrid material according to any one of claims 1 to 10. Then, a platinum group element is coordinated to the covalent organic framework.

An oxygen reduction catalyst according to a sixth aspect of the present invention includes an electrically conductive hybrid material according to any one of claims 1 to 10.

### BRIEF DESCRIPTION OF DRAWINGS

Fig. 1 shows scanning electron microscope images of electrically conductive hybrid materials according to an embodiment of the present invention.
Fig. 2 shows graphs each showing oxygen reduction potential-current curves of electrically conductive hybrid materials (Pt/CTF-1/KB) according to the embodiment of the present invention.
Fig. 3 is a graph showing a comparison between an oxygen reduction potential-current curve of a covalent organic framework and an oxygen reduction potential-current curve of an electrically conductive hybrid material.
Fig. 4 shows graphs showing oxygen reduction potential-current curves of the electrically conductive hybrid material (Pt/CTF-1/KB) and a material (20 mass% Pt/C) of Comparative example 1 in a case where methanol and oxygen are present.
Fig. 5 shows graphs showing oxygen reduction potential-current curves of the electrically conductive hybrid material (Pt/CTF-1/KB) and the material (20 mass% Pt/C) of Comparative example 1 in a case where oxygen is not present though methanol is present.
Fig. 6 is a graph showing oxygen reduction potential-current curves of electrically conductive hybrid materials (Cu/CTF-1/KB) according to the embodiment of the present invention.
Fig. 7 is a graph showing oxygen reduction potential-current curves of electrically conductive hybrid materials (Cu/CTF-3/KB, Cu/CTF-5/KB and Cu/CTF-6/KB) according to the embodiment of the present invention.
Fig. 8 is a graph showing oxygen reduction potential-current curves of electrically conductive hybrid materials (Pt/CTF-1/KB, Cu/CTF-7/KB) according to the embodiment of the present invention.
Fig. 9 is a graph showing results of performing linear sweep voltammetry for the hybrid materials of Examples 2-1 to 2-7 and a material of Comparative example 2.
Fig. 10 is a graph showing results of performing the linear sweep voltammetry for the hybrid materials of Examples 2-1 to 2-7 and the material of Comparative example 2.
Fig. 11 is a graph showing relationships between elemental composition ratios and current densities in a hydrogen oxidation reaction per unit amount of platinum in the hybrid materials of Examples 2-1 to 2-7 and the material of Comparative example 2.
Fig. 12 is a graph showing relationships between elemental composition ratios and current densities in a hydrogen generation reaction per unit amount of platinum in the hybrid materials of Examples 2-1 to 2-7 and the material of Comparative example 2.

### DESCRIPTION OF EMBODIMENTS

A description is made below of an electrically conductive hybrid material of this embodiment.

The electrically conductive hybrid material of this embodiment includes the electrically conductive hybrid material according to claims 1 to 10.

### [1. Covalent organic framework]

In this embodiment, "covalent organic framework" is a molecule formed in such a manner that atoms of hydrogen, carbon, nitrogen, oxygen, boron, sulfur or the like are bonded to one another by only covalent bond. More specifically, the covalent organic framework refers to a polymer having a structure in which the same or different plural aromatic cyclic groups form a cyclic repeating unit by the covalent bond. Moreover, the covalent organic framework also refers to a polymer having a two-dimensional or three-dimensional network structure, in which the repeating unit is continuously bonded to other one or more repeating units by the covalent bond. The covalent organic framework as described above has a porous structure having meso-sized or micro-sized pores, and in addition, has a low density and excellent thermal stability.

Preferably, the covalent organic framework for use in the electrically conductive hybrid material of this embodiment is a polymer composed of repeating units having plural triazine rings in a molecule. As described above, the repeating unit described above is bonded to other repeating units, which are adjacent thereto, by the covalent bond, and such a structure is repeated in a mutually linked manner, whereby a structure is formed.

In a preferred mode, the covalent organic framework has a structure in which plural triazine rings are bonded to one another by the covalent bond through arylene, heteroarylene or hetero atoms. Here, "arylene" refers to a divalent functional group composed by removing, from aromatic hydrocarbon, two hydrogen atoms bonded to carbon atoms composing an aromatic ring. "Heteroarylene" refers to a divalent functional group composed by removing two hydrogen atoms from a heterocyclic compound having aromatic property. Preferably, arylene is phenylene. Preferably, heteroarylene is pyridylene. Arylene and heteroarylene may each include a substituent, and such a substituent is not particularly limited; however, for example, can be alkyl or halogen. Moreover, as the hetero atoms, there can be mentioned sulfur, boron, nitrogen, phosphor and the like, and preferably, the hetero atoms are sulfur or nitrogen.

As shown in examples to be described later, the covalent organic framework having the triazine rings can be obtained in the following manner. First, a monomer having a dicyano group or a tricyano group is subjected to a condensation reaction, whereby a triazine ring is formed. Next, the condensation reaction is repeated, whereby the covalent organic framework in which a plurality of the triazine rings are bonded to one another by the covalent bond can be obtained finally. Moreover, in a case of obtaining the electrically conductive hybrid material in this embodiment, preferably, the condensation reaction can be performed in-situ on a conductor material.

It is preferable that the monomer having the dicyano group be dicyanobenzene or dicyanopyridine. It is preferable that the monomer having the tricyano group be tricyanobenzene or tricyanopyridine. In a case where the monomer is dicyanobenzene, a structure is constructed as described above, in which the plural triazine rings are bonded to one another by the covalent bond through phenylene. Moreover, in a case where the monomer is dicyanopyridine, a structure is constructed as described above, in which the plural triazine rings are bonded to one another by the covalent bond through pyridylene. Therefore, it is preferable that the covalent organic framework have a structure in which the plural triazine rings are bonded to one another by the covalent bond through phenylene or pyridylene. Moreover, it is preferable that the covalent organic framework be a compound obtained by a condensation reaction of dicyanobenzene or dicyanopyridine.

The monomer having the dicyano group can further include a substituent. Such a substituent is not particularly limited as long as the condensation reaction of the cyano group proceeds; however, for example, can be an alkyl group or a halogen group.

Preferably, the covalent organic framework for use in the electrically conductive hybrid material of this embodiment has pores with a diameter of 1 nm to 50 nm. Moreover, preferably, the covalent organic framework has a molecular weight ranging from 1000 to 20000.

Moreover, in this embodiment, it is preferable that metal be coordinated to the covalent organic framework. That is, it is preferable that the covalent organic framework be modified with metal by coordinate bond. Such metal can be transition metal, and preferably, is a platinum group element or copper. It is preferable that the platinum group element be at least one selected from the group consisting of ruthenium, rhodium, palladium, osmium, iridium and platinum.

The metal forms the coordinate bond with hetero atoms of a heteroaromatic ring that composes the covalent organic framework, and can be thereby present while forming a complex with the covalent organic framework. Then, the metal is coordinated to the covalent organic framework, whereby the metal can be dispersed in a monoatomic state, and a surface area of the metal can be increased. Moreover, electrons can move in a high ratio from the covalent organic framework to the conductor material, and accordingly, it becomes possible to enhance catalytic activity of the metal.

A representative example of the covalent organic framework for use in the electrically conductive hybrid material of this embodiment is a compound having a structure of Chemical formula 1 that follows.

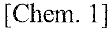

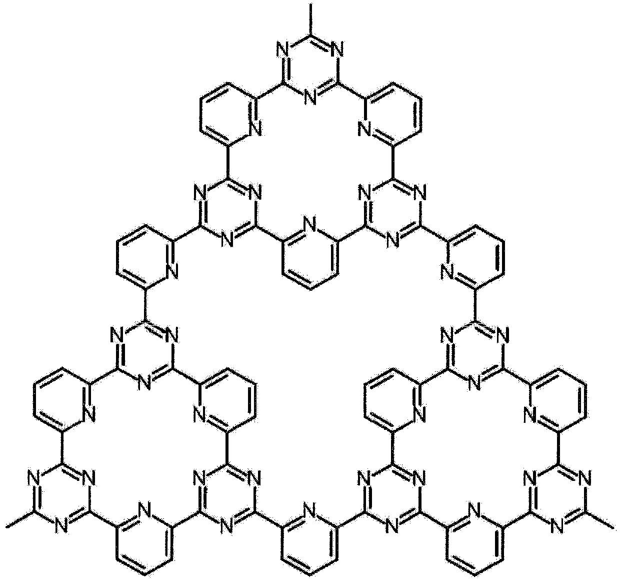

As shown in Examples to be described later, the compound of Chemical formula 1 can be synthesized in such a manner that the triazine rings are formed by performing the condensation reaction for 2,6-dicyanopyridine, and that the reaction concerned is repeated. The compound has a structure in which the triazine rings are bonded to one another by the covalent bond through pyridylene groups. As seen from Chemical formula 1, repeating units with a ring structure, which are composed of three triazine rings and three pyridine rings, are formed, and such plural repeating units are further bonded to one another by the pyridylene groups. As a result, the compound of Chemical formula 1 is a polymer, which has plural pores, and has a two-dimensional network structure. A covalent organic framework including the triazine rings of Chemical formula 1 is particularly referred to as "CTF (Covalent Triazine Framework)" in some case.

Metal can be supported on the covalent organic framework. That is, for example, as shown in Chemical formula 2, nitrogen atoms of the triazine rings and nitrogen atoms of the pyridylene groups and the metal form a coordinate bond, whereby a complex can be formed.

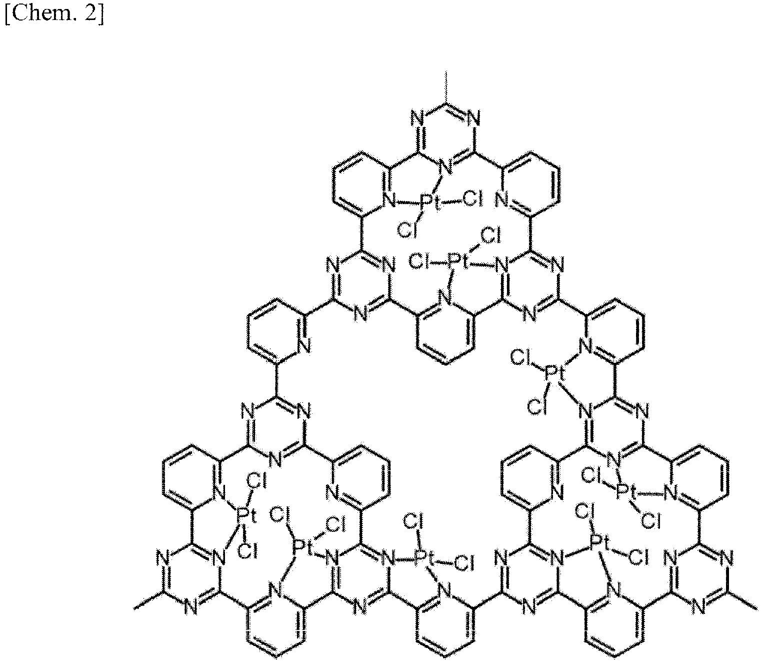

Other specific examples of the covalent organic framework for use in the electrically conductive hybrid material of this embodiment are not limited to these; however, preferably, the following compounds are included. 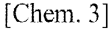 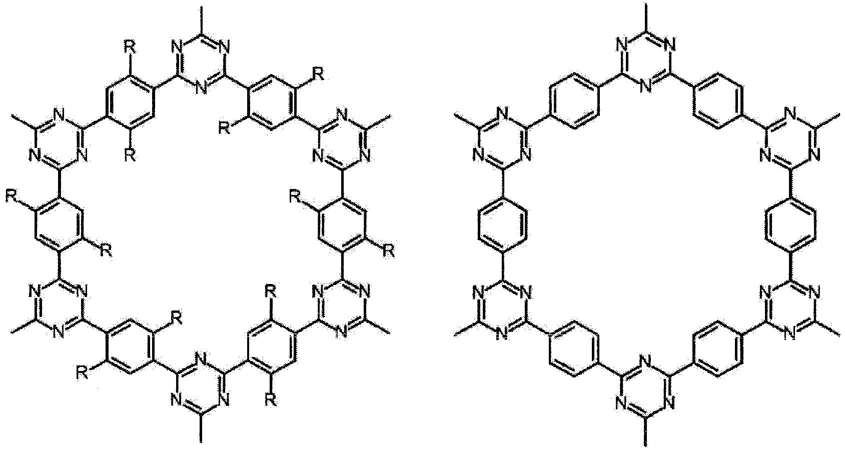 [where R is alkyl.]

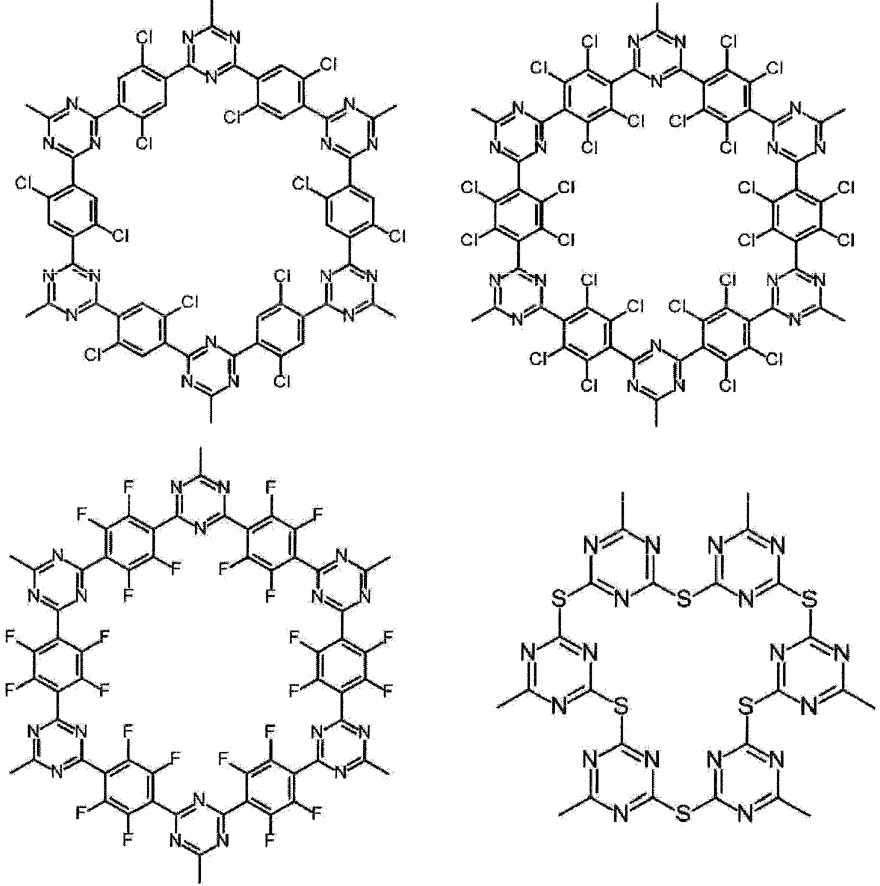

Moreover, as the covalent organic framework according to this embodiment, a compound including porphyrin rings, which is shown in Chemical formula 4, is mentioned. A covalent organic framework of Chemical formula 4 can be synthesized by the method described in X. Feng et al., Chem. Commun., 2011, 47, 1979-1981. Note that metal can be supported on the covalent organic framework of Chemical formula 4. That is to say, nitrogen atoms of the porphyrin rings and the metal form a coordinate bond, whereby a complex can be formed.

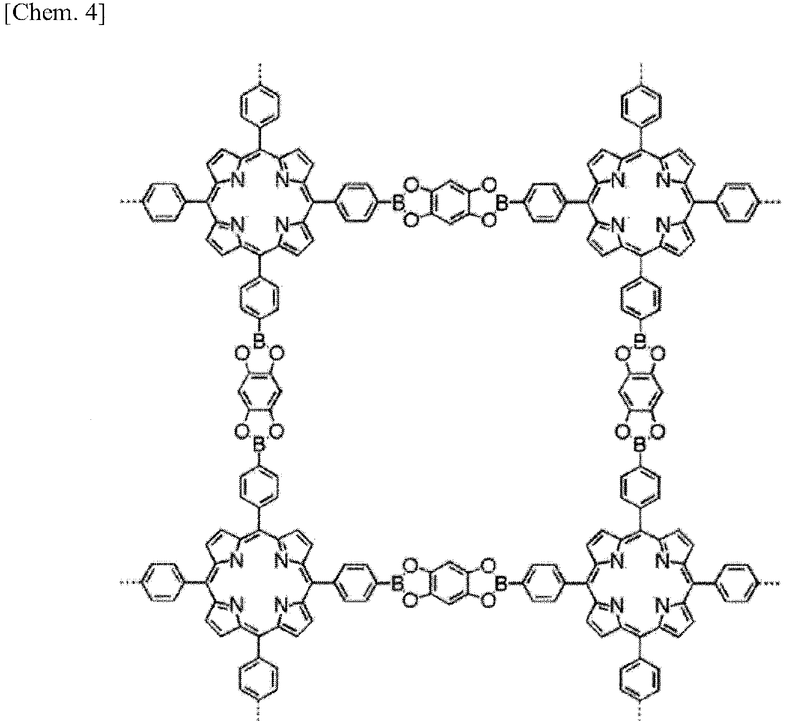

As the covalent organic framework according to this embodiment, a compound including porphyrin rings and phthalocyanine rings, which is shown in Chemical formula 5, is mentioned. A covalent organic framework of Chemical formula 5 can be synthesized by the method described in Venkata S. Pavan K. Neti et al., CrystEngComm, 2013, 15, 6892-6895. Note that metal can be supported also on the covalent organic framework of Chemical formula 5. That is to say, nitrogen atoms of the porphyrin rings and the phthalocyanine rings and the metal form a coordinate bond, whereby a complex can be formed.

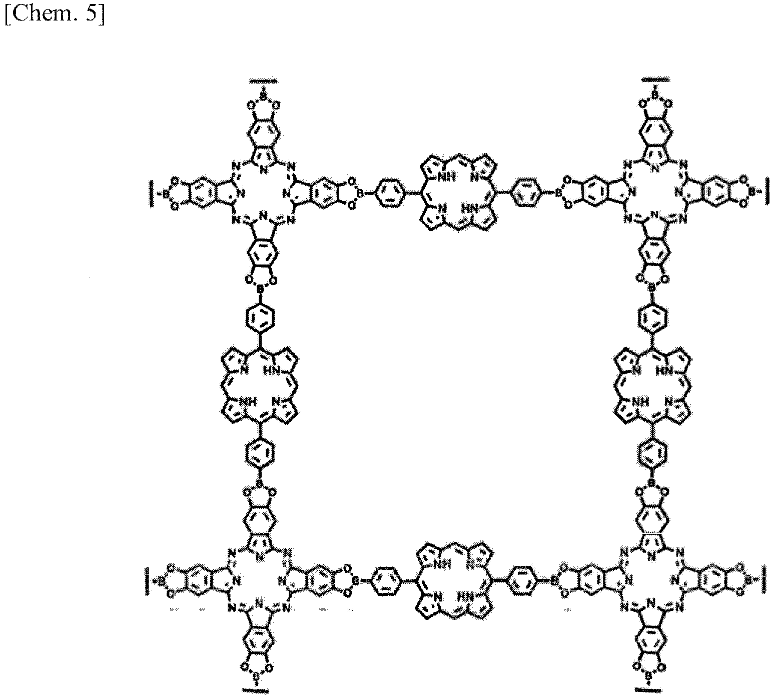

As the covalent organic framework according to this this embodiment, a cyclic compound shown in Chemical formula 7, in which three-dimensional compounds shown in Chemical formula 6 are bonded to one another through 4,4'-biphenylene groups, is mentioned. The compounds in Chemical formula 6 and Chemical formula 7 can be synthesized by the method described in Y.-B. Zhang et al., J. Am. Chem. Soc. 2013, 135, 16336-16339.

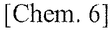

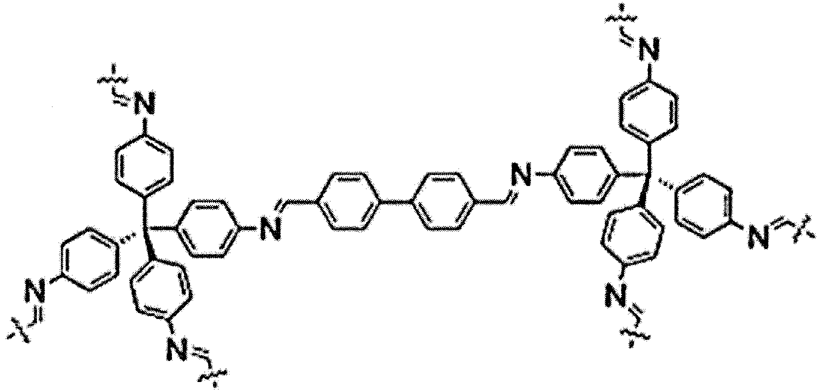

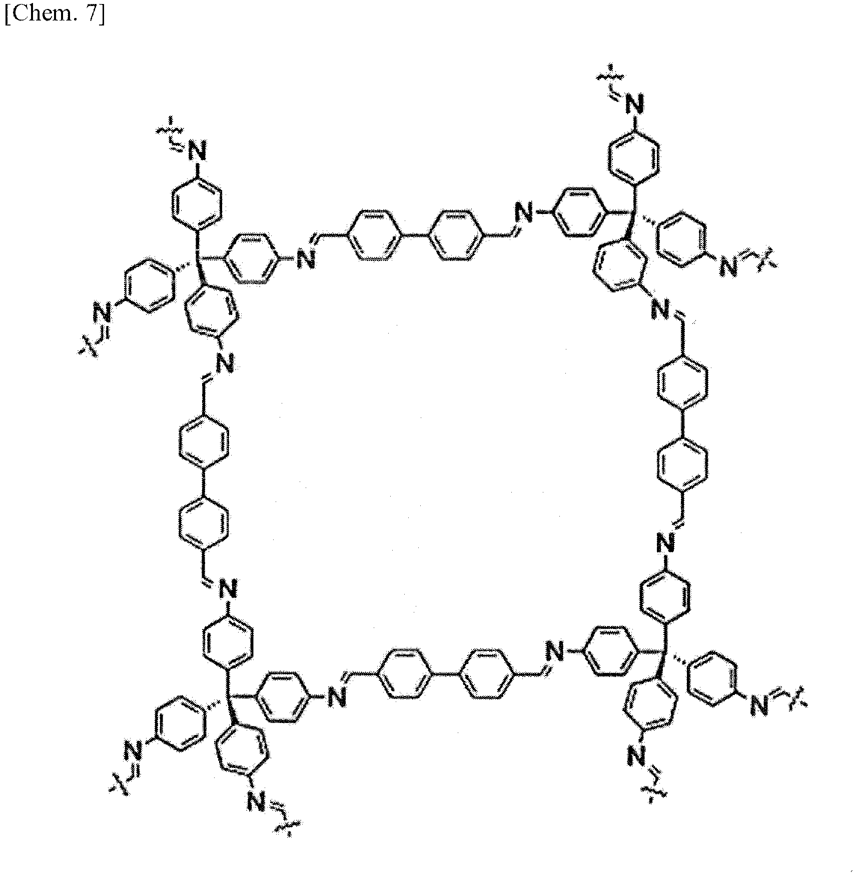

Moreover, as the covalent organic framework according to this this embodiment, a cyclic compound shown in Chemical formula 9, in which three-dimensional compounds shown in Chemical formula 8 are bonded to one another, is mentioned. The compounds in Chemical formula 8 and Chemical formula 9 can be synthesized by the method described in Q. Fang et al., J. Am. Chem. Soc. 2015, 137, 8352-8355.

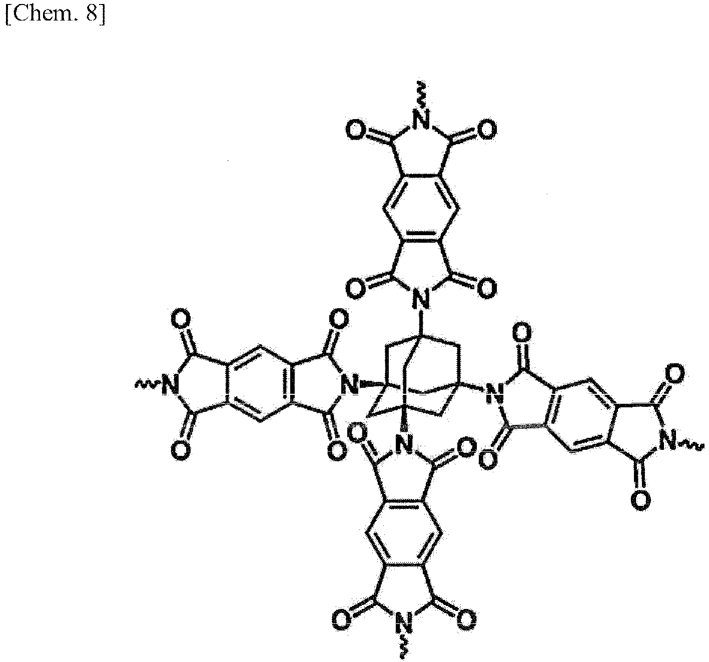

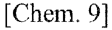

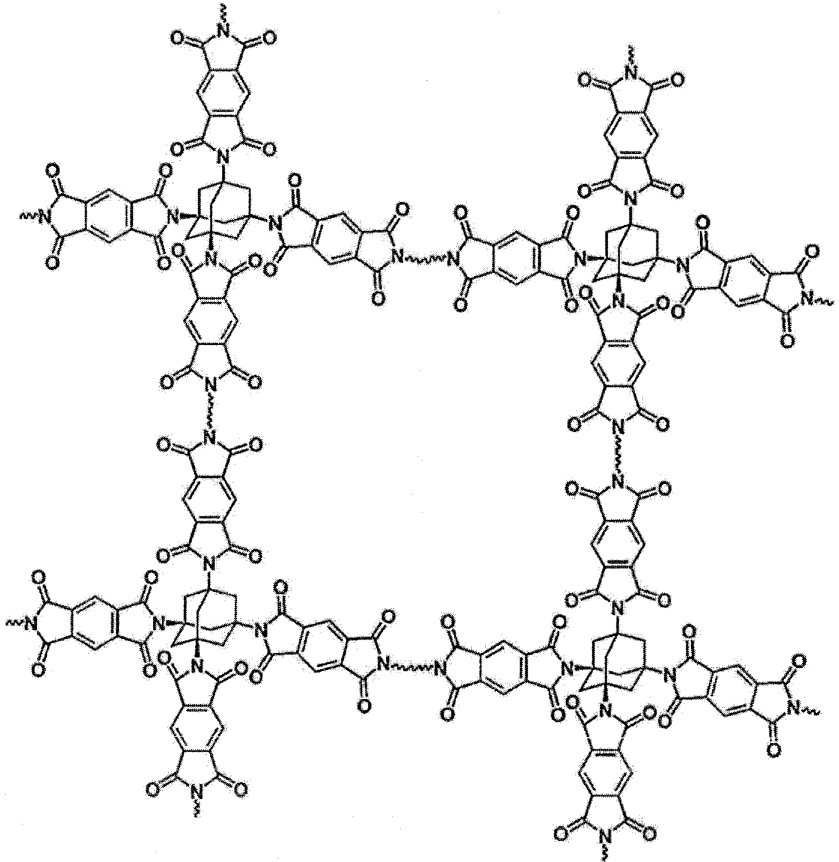

### [2. Conductor material]

The conductor material is a carbon material.

As the carbon material that composes the conductor material, at least one can be used, which is selected from the group consisting of graphite, carbon black, Ketjen Black, acetylene black, carbon nanotube, graphene and carbon fiber. Moreover, amorphous carbon can also be used as the carbon material that composes the conductor material. These carbon materials are excellent in electric conductivity and corrosion resistance, and accordingly, can maintain high electrode performance for a long period in a case of using the electrically conductive hybrid material for the electrode and the like.

The carbon material that composes the conductor material has a form of nanoparticles. That is to say, the carbon material has a particle diameter of 10 nm to 300 nm. By the fact that the particle diameter of the carbon material stays within this range, it becomes possible to highly disperse the covalent organic framework and the metal coordinated to the covalent organic framework, and to enhance activity of the metal. Note that the particle diameter of the carbon material can be obtained, for example, by observing the electrically conductive hybrid material by a scanning electron microscope (SEM).

In the electrically conductive hybrid material of this embodiment, it is preferable that a ratio of the covalent organic framework and the conductor material be 100: 10 or more as "covalent organic framework": "conductor material" in terms of a mass ratio. Moreover, it is more preferable that "covalent organic framework": "conductor material" be 100: 20 to 100: 5000 in terms of a mass ratio.

In the electrically conductive hybrid material of this embodiment, it is preferable that an elemental composition ratio of the covalent organic framework and the conductor material be 0.005 to 1. That is to say, it is preferable that a ratio of a total number of atoms of the elements which compose the covalent organic framework and a total number of atoms of the elements which compose the conductor material (that is, [total number of atoms of elements which compose covalent organic framework] / [total number of atoms of elements which compose conductor material]) be 0.005 to 1. By the fact that the composition ratio of the covalent organic framework and the conductor material stays within this range, it becomes easy to support the covalent organic framework to a constant film thickness on a surface of the conductor material. As a result, a distance between the covalent organic framework and the conductor material becomes small, and it becomes easy for the electrons to move. Therefore, in a case where the electrically conductive hybrid material is used as a catalyst, it becomes possible to further enhance catalytic activity of the electrically conductive hybrid material. Note that the elemental composition ratio in this embodiment is set to a value obtaining by performing narrow scan of X-ray photoelectron spectroscopy (XPS) for the respective elements which compose the electrically conductive hybrid material and quantitating peak areas of the respective elements. Moreover, it is defined that Monochromatic Al X-ray (10 kV) was used as an excited X-ray.

Note that, from a viewpoint of particularly enhancing the catalytic activity in the case where the electrically conductive hybrid material of this embodiment is used as a catalyst, the elemental composition ratio of the covalent organic framework and the conductor material is preferably 0.005 to 0.60, more preferably, 0.05 to 0.50.

It is preferable that the covalent organic framework be a compound obtained by an in-situ reaction of polymerizing monomers on the conductor material. For example, in a state where the nanoparticles of the carbon material are mixed with a monomer of the covalent organic framework, the monomer is subjected to a condensation reaction in molten salt of ZnCl₂ or the like. In this way, a formation reaction of the covalent organic framework can be performed in an in-situ manner on the conductor material. Note that, as the monomer of the covalent organic framework, for example, dicyanobenzene, dicyanopyridine, tricyanobenzene, tricyanopyridine and the like can be mentioned as described above.

### [3. Electrode and the like]

As mentioned above, by supporting the covalent organic framework on the conductor material such as the carbon material, the electrically conductive hybrid material of this embodiment can be given electron conductivity, and further, can highly disperse the metal in the atomic level. Therefore, the electrically conductive hybrid material can be used as an electrode catalyst in a secondary battery or a fuel cell, which are known in public in the technical field, or a catalyst and an electrode in other systems involving the electron transfer.

Specifically, it is preferable that an electrode according to this embodiment include: an electrically conductive hybrid material including: a covalent organic framework having pores; and a conductor material, wherein the covalent organic framework is supported on the conductor material. Moreover, it is preferable that a catalyst according to this embodiment also contain the electrically conductive hybrid material.

In a case of using the electrically conductive hybrid material as the catalyst, a material known in public in the technical field can be used as a binder for use in binding the catalyst to a substrate. In a case of using the electrically conductive hybrid material as a catalyst for a fuel cell, then as the binder, for example, there are mentioned polymer materials such as: cation exchange resin such as Nafion (made by DuPont Corporation), Flemion (registered trademark) (made by Asahi Glass Co., Ltd.), and Aciplex (registered trademark) (made by Asahi Kasei E-materials Corp.); anion exchange resin such as AS-4 (made by Tokuyama Corporation); fluorine-based resin such as polytetrafluoroethylene (PTFE) and polyvinylidene fluoride (PVDF); latexes such as styrene butadiene rubber (SBR); polyacrylic acid; polyvinyl alcohol; and polyacrylamide. Each type of these polymer materials may be used singly, or two types or more thereof may be used in combination. However, the binder is not particularly limited to these as long as the binder has a binding function.

In a case of using the electrically conductive hybrid material as the electrode catalyst, then as an active material and the binder in the electrode, materials known in public in the technical field can be used in response to types of the battery and the like for use. Moreover, also as a fabrication method of the electrode, a method used commonly in the technical field can be used.

The electrically conductive hybrid material of this embodiment selectively reacts with oxygen and is difficult to exhibit reaction activity with methanol even under the presence of methanol, and accordingly, is particularly suitable as an electrode material in a fuel cell and the like, which use methanol. Moreover, in the case of using the electrically conductive hybrid material for the electrode and the like, an electrically conductive auxiliary agent may be added to the electrically conductive hybrid material. As the electrically conductive auxiliary agent, electrically conductive carbon is mainly used. As such electrically conductive carbon, for example, carbon black, fiber-like carbon, graphite and the like are preferably used.

Moreover, the electrically conductive hybrid material of this embodiment can highly disperse the platinum group element in the atomic level. Therefore, the electrically conductive hybrid material can be suitably used also as a hydrogen generation catalyst, a hydrogen oxidation catalyst and an oxygen reduction catalyst.

Specifically, each of the hydrogen generation catalyst and hydrogen oxidation catalyst of this embodiment contains a catalyst which includes an electrically conductive hybrid material including: a covalent organic framework having pores; and a conductor material, wherein the covalent organic framework is supported on the conductor material. Then, it is preferable that a platinum group element be coordinated to the covalent organic framework. Moreover, the oxygen reduction catalyst of this embodiment contains a catalyst which includes an electrically conductive hybrid material including: a covalent organic framework having pores; and a conductor material, wherein the covalent organic framework is supported on the conductor material. Then, it is preferable that the conductor material be a carbon material.

Note that the electrically conductive hybrid material of this embodiment is not limited to be used as such an electrode material and the like. For example, the electrically conductive hybrid material is useful also as a material which cleans up soil contaminated by heavy metal, and a material that collects rare metal, by using a feature of the electrically conductive hybrid material, which is to form the coordinate bond with metal and to hold the metal.

Moreover, in the electrically conductive hybrid material of this embodiment, the metal forms the coordinate bond with hetero atoms of a heteroaromatic ring that composes the covalent organic framework, and can be thereby present while forming a complex with the covalent organic framework. Therefore, the electrically conductive hybrid material is useful also as a complex catalyst in an organic synthesis reaction. Moreover, by imparting chirality to the covalent organic framework, it is possible to use the electrically conductive hybrid material also as an asymmetric synthesis catalyst.

Moreover, with regard to the electrically conductive hybrid material of this embodiment, a complex structure thereof is supported on the support, and accordingly, the electrically conductive hybrid material of this embodiment has an advantage that the catalyst can be easily collected in a case where the electrically conductive hybrid material is used for the organic synthesis reaction.

### EXAMPLES

By examples, a description is made below in more detail of this embodiment; however, this embodiment is not limited to these examples.

### [Example 1-1]

### 1. Synthesis of electrically conductive hybrid material

In accordance with a scheme shown in Chemical formula 10, a hybrid material, in which a platinum complex of a covalent triazine framework (CTF-1) was supported on Ketjen Black (KB), was synthesized.

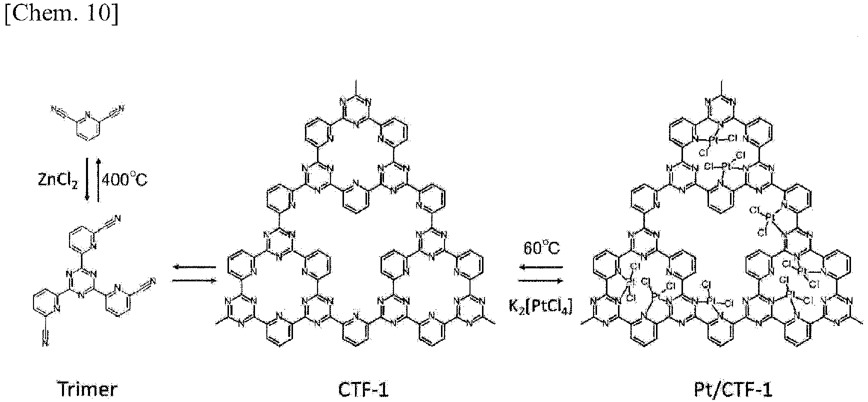

First, 1.363 g of ZnCl₂, 0.129 g of 2,6-dicyanopyridine, and 0.129 g of Ketjen Black were mixed together in a glove box. As ZnCl₂, one made by Wako Pure Chemical Industries, Ltd. was used, and as 2,6-dicyanopyridine, one made by Sigma-Aldrich Co. LLC. was used. As Ketjen Black, EC600JD made by Lion Specialty Chemicals Co., Ltd. was used.

Next, a mixture thus obtained was put into a glass tube, the glass tube was hermetically sealed, and the mixture was heated under a vacuum condition. Then, the mixture was maintained at a temperature of 400°C for 21 hours. Obtained powder was washed by 0.1 M HCl, water, tetrahydrofuran (THF) and acetonitrile, followed by drying under reduced pressure. Then, the already dried powder was impregnated with an aqueous solution of K₂[PtCl₄] (made by Wako Pure Chemical Industries, Ltd.), in which a concentration was 160 mM, at 60°C for 4 hours, and was thereby added with platinum. Thereafter, the powder was dried after being washed by water and acetone, whereby a hybrid material (Pt/CTF-1/KB) was obtained.

Moreover, by a production method similar to the above-mentioned method, hybrid materials (Pt/CTF-1/KB), in which mass ratios of platinum/CTF: Ketjen Black were set to 100: 5, 100: 20 and 100: 100, were also prepared. Note that, in this description and the drawings, "Pt/CTF-1" indicates such a compound in which the platinum complex was supported on the covalent triazine framework (CTF-1). Moreover, "Pt/CTF-1/KB" indicates such a hybrid material in which the above-mentioned Pt/CTF-1 was supported on Ketjen Black.

### [Example 1-2]

First, in a similar way to Example 1, 1.363 g of ZnCl₂, 0.129 g of 2,6-dicyanopyridine, and 0.129 g of Ketjen Black were mixed together in a glove box.

Next, a mixture thus obtained was put into a glass tube, the glass tube was hermetically sealed, and the mixture was heated under a vacuum condition. Then, the mixture was maintained at a temperature of 400°C for 21 hours. Obtained powder was washed by 0.1 M HCl, water, tetrahydrofuran and acetonitrile, followed by drying under reduced pressure. Then, the already dried powder was impregnated with an aqueous solution of CuCl₂ (made by Wako Pure Chemical Industries, Ltd.), in which a concentration was 160 mM, at 60°C for 4 hours, , and was thereby added with copper. Thereafter, the powder was washed by water, further was mixed into a 0.1 M NaOH aqueous solution, and was stirred for 1 hour while being irradiated with an ultrasonic wave. Then, the already stirred powder was dried after being washed by water and acetone in individual processes, whereby a hybrid material (Cu/CTF-1/KB) was obtained. Note that, in this description and the drawings, "Cu/CTF-1/KB" indicates such a hybrid material in which a copper complex of the covalent triazine framework (CTF-1) was supported on Ketjen Black. Moreover, in Chemical formula 11, a partial structure as only the repeating unit is shown.

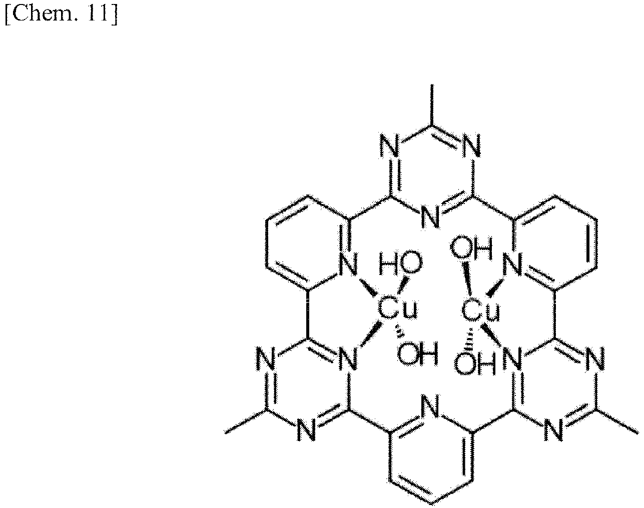

### [Example 1-3]

There were synthesized hybrid materials, in which CTF-2, CTF-4 and CTF-5 having the following structures were individually held by Ketjen Black, in a similar way to Example 1-1 except for using dicyanobenzene derivatives, which are shown in Chemical formula 12, in place of 2,6-dicyanopyridine. Note that an upper stage of Chemical formula 12 indicates structures of monomers, and a lower stage thereof indicates the structures of CTFs.

Note that CTF-3 was synthesized almost in conformity with the description of J. Liu et al., J. Chem. Eng. Data, 2013, 58, 3557-3562. Moreover, CTF-6 was synthesized almost in conformity with the description of Yunfeng Zhao et al., Energy Environ. Sci., 2013, 6, 3684-3692. However, in order to support each of CTF-3 and CTF-6 on Ketjen Black, the monomers were reacted after the monomers and Ketjen Black were mixed with each other in a similar way to Example 1-1.

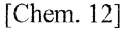

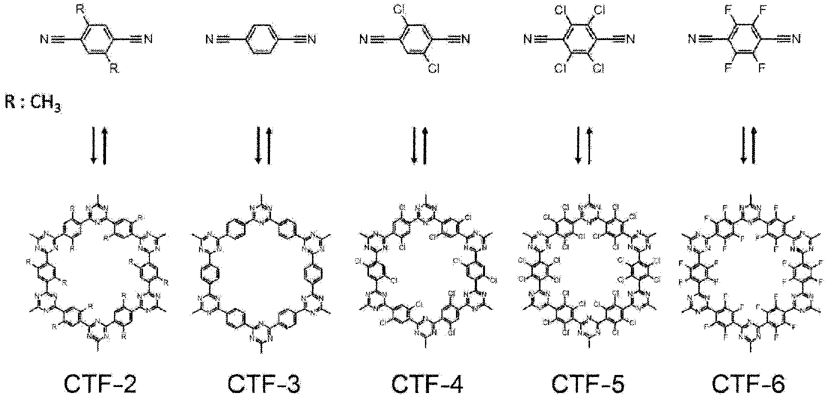

Then, copper was supported on the obtained CTF-3/KB, CTF-5/KB and CTF-6/KB in a similar way to Example 1-2, whereby the hybrid materials (Cu/CTF-3/KB, Cu/CTF-5/KB and Cu/CTF-6/KB) were obtained.

### [Example 1-4]

CTF-7 shown in Chemical formula 13, in which the triazine rings were bonded to one another by sulfur atoms, were synthesized. Specifically, first, 0.235 g of trichiocyanuric acid (made by Wako Pure Chemical Industries, Ltd.) was dissolved into 30 ml of 1,4-dioxane (made by Wako Pure Chemical Industries, Ltd.), and was added with 0.625 ml of N,N-diisopropylethylamine (made by Tokyo Chemical Industry Co., Ltd.). While being held at 15°C, this solution was added with a solution obtained by dissolving 0.125 g of 2,4,6-trichloro-1,3,5-triazine (made by Tokyo Chemical Industry Co., Ltd.) into 7.5 ml of 1,4-dioxane. This solution was further added with 0.360 g of Ketjen Black (EC600JD), and a resultant thereof was refluxed at 15°C for 1 hour, 25°C for 2 hours, and 85°C for 4 hours. An obtained solid was filtrated, and was then dried under reduced pressure after being washed by 1,4-dioxane and ethanol.

Then, the already dried powder (CTF-7/KB) was impregnated with a 5mM aqueous solution of K₂[PtCl₄] (made by Wako Pure Chemical Industries, Ltd.) at 60°C for 4 hours, and was thereby added with platinum. Thereafter, the powder was dried after being washed by water and acetone, whereby a hybrid material (Pt/CTF-7/KB) was obtained.

Moreover, copper was supported on the obtained CTF-7/KB in a similar way to Example 1-2, whereby the hybrid material (Cu/CTF-7/KB) was obtained.

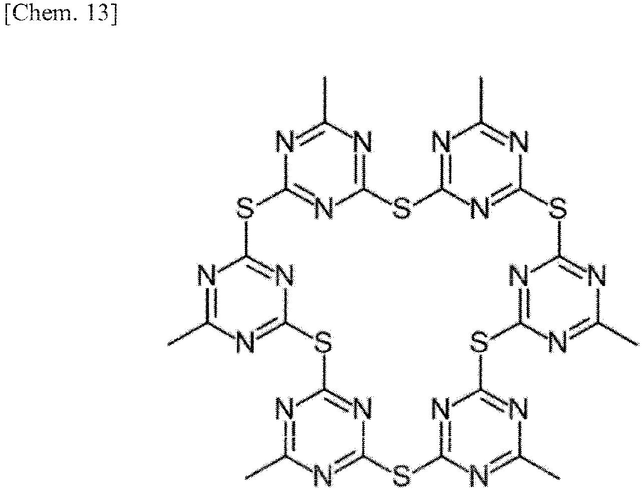

### [Comparative example 1]

There were used: commercially available 20 mass% Pt/C, in which 20 % by mass of platinum was supported on carbon powder; and commercially available Pt-Vulcan XC-72.

### [Evaluation]

### 1. Scanning electron microscope observation and the like

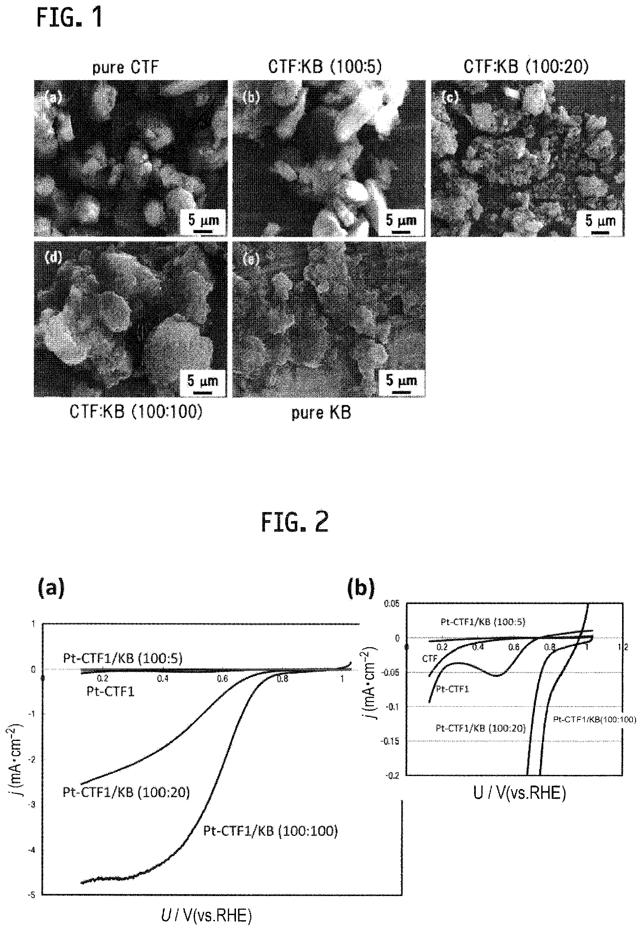

Fig. 1 shows scanning electron microscope images of the hybrid materials in which the mass ratios of platinum/CTF: Ketjen Black were set to 100: 5; 100: 20 and 100: 100, the hybrid materials having been prepared in Example 1-1. Moreover, Fig. 1 also shows scanning electron microscope images of the covalent triazine framework (pure CTF) and Ketjen Black (pure KB). From the SEM images, it is understood that such an electrically conductive hybrid material, in which the covalent triazine framework and Ketjen Black were favorably mixed with each other, was obtained.

Moreover, molecular structures of the obtained hybrid materials were analyzed by the X-ray photoelectron spectroscopy (XPS) and extended X-ray absorption fine structure (EXAFS) analysis. As a result, based on bond peaks of the hybrid materials, it was confirmed that CTF was formed, and since a peak of Pt-Pt bond was not observed, it was confirmed that CTF and one divalent platinum atom formed the coordinate bond.

### 2. Electrochemical measurement

Rotating disk electrodes (RDEs) including the hybrid materials synthesized in Examples 1-1 to 1-4 were fabricated, and electrochemical properties thereof were evaluated.

Specifically, first, 5 mg powder of each of the hybrid materials was dispersed into 175 µL of ethanol and a 47.5 µL solution of Nafion (registered trademark). As such a Nafion solution, one made by Sigma-Aldrich Co. LLC., which was a 5 mass% solution of a lower aliphatic alcohol mixture and water, was used. Then, 7 µL of the solution was dropped onto a glassy carbon electrode (0.196 cm⁻²), so that a working electrode was prepared. In this case, the hybrid material was adjusted so as to be coated at 0.8 mg·cm⁻². Moreover, a Pt wire and Ag/AgCl/KClsat. were used as a counter electrode and a reference electrode, respectively. Note that, in a case of the measurement, a rotation speed of the working electrode was set to 1500 rpm.

Note that electrical conductivity of the hybrid material was measured by using a resistivity meter (Loresta-GP, made by Mitsubishi Chemical Analytech Co., Ltd.).

Figs. 2(a) and 2(b) show oxygen reduction potential-current curves of Pt/CTF-1/KB synthesized in Example 1-1. For measurement of the above, an oxygen saturated solution of 0.5 M H₂SO₄ was used. Here, Fig. 2(b) is an enlarged view of Fig. 2(a). Moreover, Figs. 2(a) and 2(b) also show an oxygen reduction potential-current curve of a material, in which carbon black was not used, and platinum was supported on CTF-1. From results of Fig. 2, it was observed that a current derived from the oxygen reduction was significantly increased by supporting Pt/CTF-1 on Ketjen Black. From the measurement of the electrical conductivity, it was confirmed that this was because the electrical conductivity was enhanced by supporting Pt/CTF-1 on Ketjen Black.

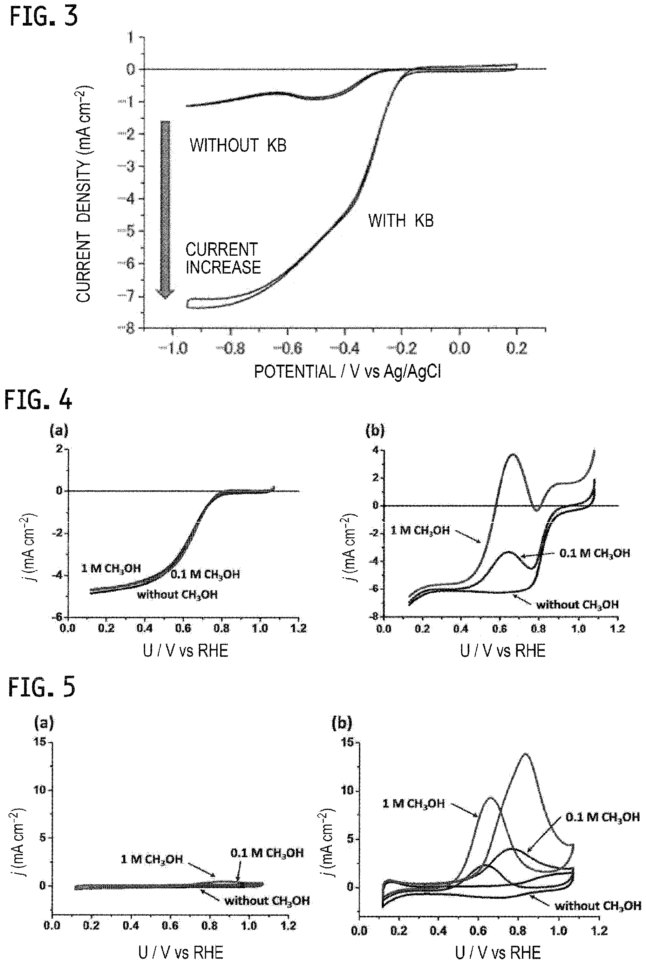

Moreover, Fig. 3 shows a result of comparing oxygen reduction activities when Ketjen Black is present and when Ketjen Black is not present with each other by using CTF-1 that does not include Pt. For measurement of the above, an oxygen saturated solution (pH13) of 0.1 M NaOH was used. As a result, it was understood that, even in a case where Pt is not included, the electrical conductivity was enhanced by supporting Ketjen Black, leading to an increase of such an oxygen reduction current of CTF-1.

Next, studied was inhibition by methanol in the oxygen reduction reaction of the hybrid material including CTF-1. Fig. 4(a) shows oxygen reduction reaction activity of the Pt/CTF-1/KB hybrid material in a case where methanol is present in the solution. Moreover, Fig. 4(b) shows results of performing similar measurement in 20 mass% Pt/C of Comparative example 1.

From Fig. 4, it was understood that, in the hybrid material including CTF-1, the oxygen reduction current was hardly changed by the presence of methanol, and meanwhile, in Pt/C, the oxygen reduction current was decreased to a large extent, and Pt/C was largely affected by the oxidation of methanol. This result suggests that the hybrid material including CTF-1 does not contribute to the oxidation of methanol, and has high selectivity for the oxygen reduction reaction.

Moreover, Fig. 5 shows results of performing similar measurement under a condition where oxygen is not included in the solution. As obvious from Figs. 5(a) and 5(b), the hybrid material including CTF-1 does not have activity for a methanol oxidation reaction though including Pt, and meanwhile, in Pt/C, the activity for the methanol oxidation reaction was observed. Also from this result, it is indicated that the hybrid material including CTF-1 as described above has high selectivity for only the oxygen reduction reaction.

In general, it is known that a platinum cluster having the Pt-Pt bond has activity for the oxidation of methanol. This is considered to be because, in the hybrid material of this embodiment, as shown in the above-mentioned result of EXAFS, Pt serves as an atom and is present while being coordinated to CTF-1.

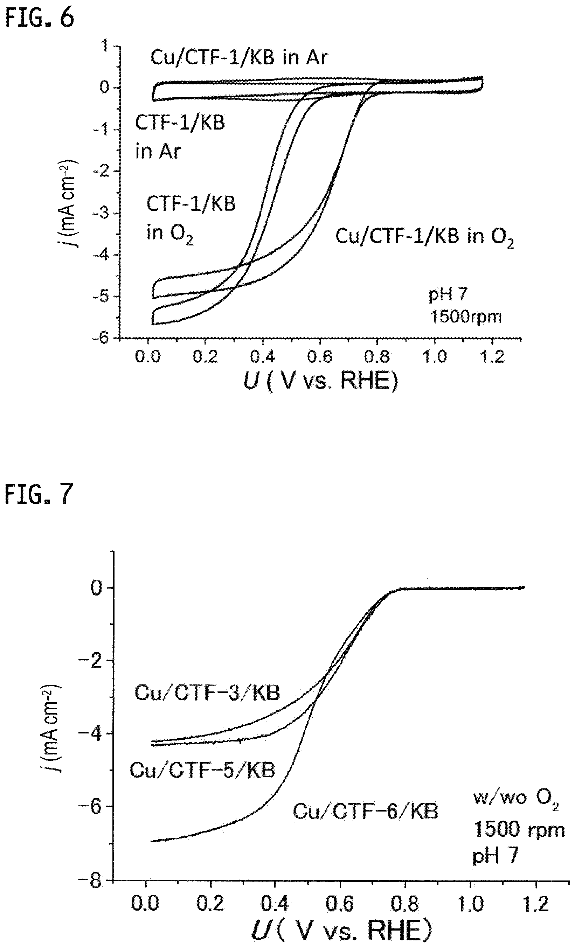

In a similar way, the oxygen reduction reation activity was measured also for the hybrid material (Cu/CTF-1/KB) of Example 1-2, in which the metal of the Pt/CTF-1/KB hybrid material was replaced by copper. Results are shown in Fig. 6. From Fig. 6, it was understood that, even in a case where copper was supported, high electrical conductivity was obtained, and the oxygen reduction activity was enhanced.

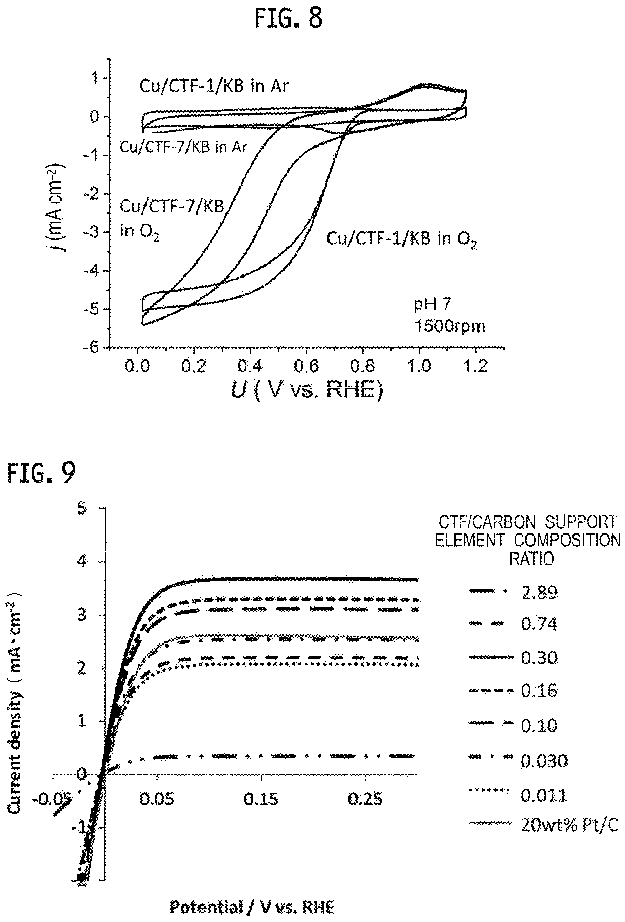

Moreover, the measurement of electrical conductivity was performed also for the covalent organic frameworks, which were obtained in Examples 1-3 and 1-4 and had structures other than CTF-1. Fig. 7 shows measurement results of oxygen reduction potential-current curves for the hybrid materials (Cu/CTF-3/KB, Cu/CTF-5/KB and Cu/CTF-6/KB), which were synthesized in Example 1-3, and had copper supported on CTF-3, CTF-5 and CTF-6. Moreover, Fig. 8 shows measurement results for Cu/CTF-7/KB. From these results, it was understood that the electrical conductivity was enhanced also in CTF in which the triazine rings were bonded to one another by phenylene or sulfur.

As mentioned above, the nitrogen atoms of the triazine rings of the covalent organic framework and the nitrogen atoms of the pyridylene group and the metal form the coordinate bond, whereby the metal is supported on the covalent organic framework. Hence, to a reaction in which a metal site or a site affected by the coordinate bond of metal is an activity center, such a covalent organic framework, which includes the nitrogen atoms of the triazine rings and the nitrogen atoms of the pyridylene group, is widely applicable in a similar way to this example.

### [Example 2-1]

In this example, an electrically conductive hybrid material was prepared, in which an elemental composition ratio of the covalent organic framework and the conductor material, which is quantitated by the X-ray photoelectron spectroscopy, is 2.39.

First, 1.36 g of ZnCl₂, 0.129 g of 2,6-dicyanopyridine, and 0.00645 g of Ketjen Black were mixed together in a glove box. As ZnCl₂, one made by Wako Pure Chemical Industries, Ltd. was used, and as 2,6-dicyanopyridine, one made by Sigma-Aldrich Co. LLC. was used. As Ketjen Black, EC600JD made by Lion Specialty Chemicals Co., Ltd. was used.

Next, a mixture thus obtained was put into a glass tube, the glass tube was hermetically sealed, and the mixture was held at 400°C for 21 hours under a vacuum condition. Obtained powder was washed by 0.1 M HCl, water, THF and acetonitrile, followed by drying under reduced pressure. Then, the already dried powder was mixed into an aqueous solution of 1 mM K₂[PtCl₄] (made by Wako Pure Chemical Industries, Ltd.), and was stirred while being irradiated with an ultrasonic wave, and was thereby added with platinum. Thereafter, the powder was dried after being washed by water and acetone, whereby a hybrid material was obtained.

### (X-ray photoelectron spectroscopy (XPS) measurement)

The hybrid material of this embodiment was subjected to XPS measurement, whereby the composition ratio (N/C) of nitrogen and carbon, which compose the hybrid material, was measured. For the XPS measurement, an XPS apparatus (AXIS Ultra HAS, made by Kratos Analytical Ltd.) was used. Moreover, Monochromatic Al X-ray (10 kV) was used as an excited X-ray. Then, narrow scan measurement for each of the elements was performed, and the composition ratio was obtained from areas of the respective peaks.

When the composition ratio of N and C was obtained by the XPS analysis, N/C was equal to 0.148 (N/C = 0.148). Moreover, a composition ratio of N and C in a case of only CTF synthesized in a similar way to the above without adding Ketjen Black was equal to 0.210 (N/C = 0.210). Hence, from these results, the elemental composition ratio of CTF and Ketjen Black as the conductor material was obtained to be equal to 2.89.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, a ratio of a CTF-derived carbon component and a Ketjen Black-derived carbon component in the hybrid material is 14.8×(100/21.0): [100-14.8×(100/21.0)], that is, 70.5: 29.5. Hence, the elemental composition ratio of CTF and Ketjen Black as the conductor material can be calculated as (14.8+70.5)/29.5 = 2.89.

Note that a supported amount of platinum in the hybrid material of this embodiment was 20.2 wt%.

### [Example 2-2]

In this example, an electrically conductive hybrid material was prepared, in which the elemental composition ratio of the covalent organic framework and the conductor material, which is quantitated by the X-ray photoelectron spectroscopy, is 0.74. Specifically, the hybrid material was synthesized in a similar way to Example 2-1 except that an added amount of Ketjen Black was set to 0.0258 g.

When the composition ratio of N and C was obtained by the XPS analysis in a similar way to Example 2-1, N/C was equal to 0.079 (N/C = 0.079). Hence, the elemental composition ratio of CTF and Ketjen Black was obtained to be equal to 0.74.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 7.9×(100/21.0): [100-7.9×(100/21.0)], that is, 38: 62. Hence, the elemental composition ratio of CTF and Ketjen Black as the conductor material can be calculated as (7.9+38)/62 = 0.74.

Note that a supported amount of platinum in the hybrid material of this embodiment was 15.1 wt%.

### [Example 2-3]

In this example, an electrically conductive hybrid material was prepared, in which the elemental composition ratio of the covalent organic framework and the conductor material, which is quantitated by the X-ray photoelectron spectroscopy, is 0.30. Specifically, the hybrid material was synthesized in a similar way to Example 2-1 except that the added amount of Ketjen Black was set to 0.129 g.

When the composition ratio of N and C was obtained by the XPS analysis in a similar way to Example 2-1, N/C was equal to 0.041 (N/C = 0.041). Hence, the elemental composition ratio of CTF and Ketjen Black was obtained to be equal to 0.30.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 4.1×(100/21.0): [100-4.1×(100/21.0)], that is, 20: 80. Hence, the elemental composition ratio of CTF and Ketjen Black as the conductor material can be calculated as (4.1+20)/80 = 0.30.

Note that the supported amount of platinum in the hybrid material of this embodiment was 8.7 wt%.

### [Example 2-4]

In this example, an electrically conductive hybrid material was prepared, in which the elemental composition ratio of the covalent organic framework and the conductor material, which is quantitated by the X-ray photoelectron spectroscopy, is 0.16. Specifically, the hybrid material was synthesized in a similar way to Example 2-1 except that the added amount of Ketjen Black was set to 0.129 g, and that the amount of 2,6-dicyanopyridine was set to 0.0645 g.

When the composition ratio of N and C was obtained by the XPS analysis in a similar way to Example 2-1, N/C was equal to 0.025 (N/C = 0.025). Hence, the elemental composition ratio of CTF and Ketjen Black was obtained to be equal to 0.16.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 2.5×(100/21.0): [100-2.5×(100/21.0)], that is, 12: 88. Hence, the elemental composition ratio of CTF and Ketjen Black as the conductor material can be calculated as (2.5+12)/88 = 0.16.

Note that the supported amount of platinum in the hybrid material of this embodiment was 5.7 wt%.

### [Example 2-5]

In this example, an electrically conductive hybrid material was prepared, in which the elemental composition ratio of the covalent organic framework and the conductor material, which is quantitated by the X-ray photoelectron spectroscopy, is 0.10. Specifically, the hybrid material was synthesized in a similar way to Example 2-1 except that the added amount of Ketjen Black was set to 0.129 g, and that the amount of 2,6-dicyanopyridine was set to 0.0323 g.

When the composition ratio of N and C was obtained by the XPS analysis in a similar way to Example 2-1, N/C was equal to 0.016 (N/C = 0.016). Hence, the elemental composition ratio of CTF and Ketjen Black was obtained to be equal to 0.10.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 1.6×(100/21.0): [100-1.6×(100/21.0)], that is, 7.6: 92. Hence, the elemental composition ratio of CTF and Ketjen Black as the conductor material can be calculated as (1.6+7. 6)/92 = 0.10.

Note that the supported amount of platinum in the hybrid material of this embodiment was 4.3 wt%.

### [Example 2-6]

In this example, an electrically conductive hybrid material was prepared, in which the elemental composition ratio of the covalent organic framework and the conductor material, which is quantitated by the X-ray photoelectron spectroscopy, is 0.030. Specifically, the hybrid material was synthesized in a similar way to Example 2-1 except that the added amount of Ketjen Black was set to 0.129 g, and that the amount of 2,6-dicyanopyridine was set to 0.0161 g.

When the composition ratio of N and C was obtained by the XPS analysis in a similar way to Example 2-1, N/C was equal to 0.0050 (N/C = 0.0050). Hence, the elemental composition ratio of CTF and Ketjen Black was obtained to be equal to 0.030.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 0.50×(100/21.0): [100-0.50×(100/21.0)], that is, 2.4: 98. Hence, the elemental composition ratio of CTF and Ketjen Black as the conductor material can be calculated as (0.50+2.4)/98 = 0.030.

Note that the supported amount of platinum in the hybrid material of this embodiment was 2.7 wt%.

### [Example 2-7]

In this example, an electrically conductive hybrid material was prepared, in which the elemental composition ratio of the covalent organic framework and the conductor material, which is quantitated by the X-ray photoelectron spectroscopy, is 0.0090. Specifically, the hybrid material was synthesized in a similar way to Example 2-1 except that the added amount of Ketjen Black was set to 0.129 g, and that the amount of 2,6-dicyanopyridine was set to 0.0040 g.

When the composition ratio of N and C was obtained by the XPS analysis in a similar way to Example 2-1, N/C was equal to 0.0019 (N/C = 0.0019). Hence, the elemental composition ratio of CTF and Ketjen Black was obtained to be equal to 0.011.

A description is made in more detail of such a method of obtaining the elemental composition ratio of CTF and Ketjen Black as the conductor material. As mentioned above, the composition ratio (N/C) of N and C in the case of only CTF is equal to 0.210. Therefore, the ratio of the CTF-derived carbon component and the Ketjen Black-derived carbon component in the hybrid material is 0.19×(100/21.0): [100-0.19×(100/21.0)], that is, 0.90: 99. Hence, the elemental composition ratio of CTF and Ketjen Black as the conductor material can be calculated as (0.19+0.90)/99 = 0.011.

Note that the supported amount of platinum in the hybrid material of this embodiment was 2.4 wt%.

### [Comparative example 2]

20 wt% Pt/C (HiSPEC (registered trademark) - 3000, made by Johnson Matthey Fuel cells Ltd.), in which 20 wt% platinum was supported on carbon powder, was used.

### [Hydrogen oxidation catalytic activity evaluation and hydrogen generation catalytic activity evaluation]

First, 2.5 mg powder of the hybrid material was added into a solution of 750 µL of ethanol and 50 µL of Nafion, and was dispersed by an ultrasonic homogenizer. As such a Nafion solution, one made by Sigma-Aldrich Co. LLC., which was a 5 mass% solution of a lower aliphatic alcohol mixture and water, was used. Then, 2.1 µL of the solution was dropped onto a glassy carbon electrode (0.1256 cm²), so that a working electrode was fabricated. In this case, a supported amount of the hybrid material (catalyst) on the glassy carbon electrode was 52.2 µg/cm².

By using this working electrode, in a 0.1 M HClO₄ aqueous solution, under a hydrogen saturated condition, linear sweep voltammetry (LSV) was performed at 2500 rpm as a number of revolutions by using a Ti wire as a counter electrode and using a reversible hydrogen electrode as a reference electrode. In this case, a sweep rate was set to 1 mV/sec.

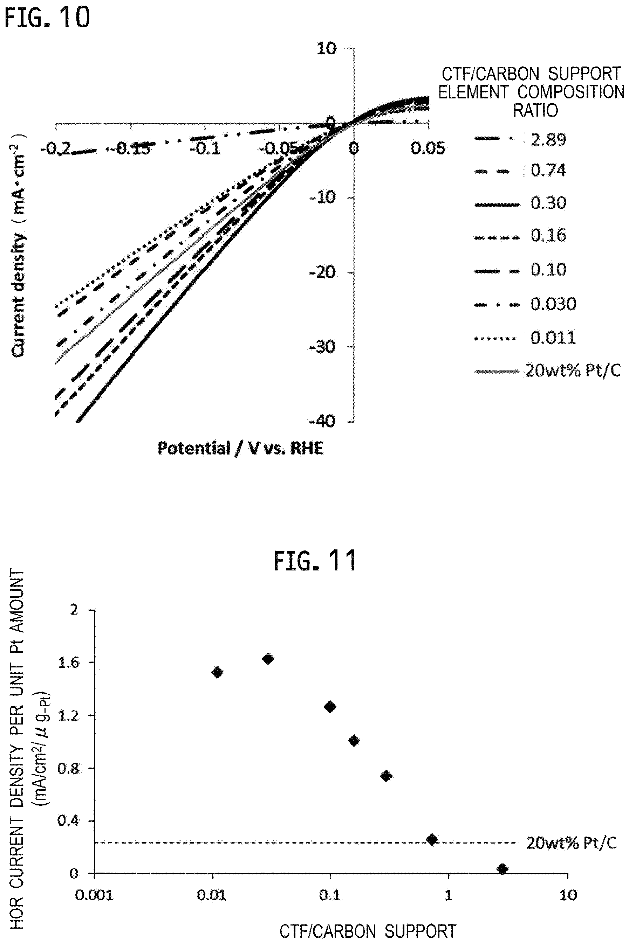

Fig. 9 and Fig. 10 show results of performing the linear sweep voltammetry for the hybrid materials of Examples 2-1 to 2-7 and Comparative example 2. Fig. 9 illustrates hydrogen oxidation catalytic activities per unit amount of the catalyst, where it can be said that the catalytic activities are higher as such a current density is larger in a positive direction. Then, from Fig. 9, it is understood that, preferably, the elemental composition ratio of the covalent organic framework and the conductor material ranges from 0.05 to 0.50 from a viewpoint of further enhancing the catalytic activity in the case where the electrically conductive hybrid material is used as the hydrogen oxidation catalyst.

Note that, even in a catalyst in which the hydrogen oxidation catalytic activity is low, it is possible to enhance the hydrogen oxidation catalytic activity of the catalyst as the electrode by appropriately increasing the supported amount of the catalyst on the electrode. That is to say, for example, even in the case where the ratio as CTF/carbon support is equal to 2.89, the catalyst can achieve high hydrogen oxidation catalytic activity as an electrode in a similar way to the other catalyst if the catalyst supported amount is increased.

Fig. 10 illustrates hydrogen generation catalytic activities per unit amount of the catalyst, where it can be said that the catalytic activities are higher as such a current density is larger in a negative direction. Then, from Fig. 10, it is understood that, preferably, the elemental composition ratio of the covalent organic framework and the conductor material ranges from 0.05 to 0.50 from a viewpoint of further enhancing the catalytic activity in the case where the electrically conductive hybrid material is used as the hydrogen generation catalyst. Note that, as mentioned above, even in the catalyst in which the hydrogen generation catalytic activity is low, it is possible to enhance the hydrogen generation catalytic activity of the catalyst as the electrode by appropriately increasing the supported amount of the catalyst on the electrode.

A graph of Fig. 11 illustrates hydrogen oxidation catalytic activities per unit amount of platinum, which are obtained from the hydrogen oxidation catalytic activities per unit amount of the catalyst in Fig. 9 and from results of the composition analysis by the XPS. In the graph of Fig. 11, such catalytic activity per unit amount of platinum is higher as a HOR (Hydrogen oxidation reaction) current density per unit amount of platinum is larger. From results of Fig. 11, it is understood that the HOR current density per unit amount of platinum is larger than that in 20 wt% Pt/C in a case where the elemental composition ratio of the covalent organic framework and the conductor material, which is quantitated by the XPS, is 0.60 or less. Hence, from a viewpoint of the current density per unit amount of platinum, the elemental composition ratio of the covalent organic framework and the conductor material, which is quantitated by the XPS, is preferably 0.005 to 1, more preferably 0.005 to 0.60. Moreover, the elemental composition ratio is still preferably 0.005 to 0.30, particularly preferably 0.005 to 0.10, most preferably 0.005 to 0.05.

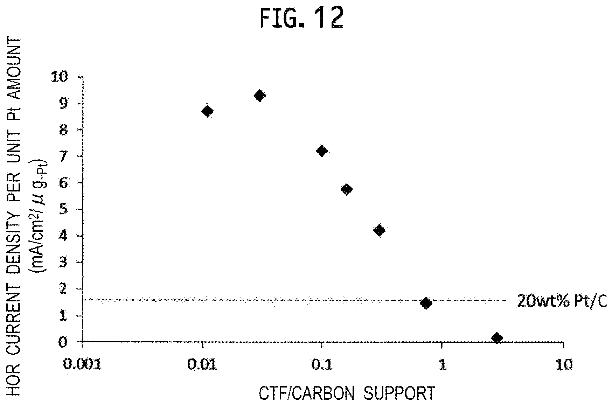

A graph of Fig. 12 illustrates hydrogen generation catalytic activities per unit amount of platinum, which are obtained from the hydrogen generation catalytic activities per unit amount of the catalyst in Fig. 10 and from the results of the composition analysis by XPS. In the graph of Fig. 12, such catalytic activity per unit amount of platinum is higher as a HER (Hydrogen Evolution Reaction) current density per unit amount of platinum is larger. From results of Fig. 12, it is understood that the HER current density per unit amount of platinum is larger than that in 20 wt% Pt/C in a case where the elemental composition ratio of the covalent organic framework and the conductor material, which is quantitated by the XPS, is smaller than 0.60. Hence, from the viewpoint of the current density per unit amount of platinum, the elemental composition ratio of the covalent organic framework and the conductor material, which is quantitated by the XPS, is preferably 0.005 to 1, more preferably 0.005 to 0.60. Moreover, the elemental composition ratio is still preferably 0.005 to 0.30, particularly preferably 0.005 to 0.10, most preferably 0.005 to 0.05.

Note that, in the electrically conductive hybrid material of this embodiment, a preferable elemental composition ratio of the covalent organic framework with respect to the conductor material does not depend on a type of the covalent organic framework. Any type of the covalent organic framework is a material with small electrical conductivity, where a distance between the covalent organic framework and the conductor material, in which the electron transfer is effective, is almost constant. That is to say, in a case where the covalent organic framework is supported in a form of a film on a surface of the conductor material, a film thickness of the covalent organic framework, in which the electron transfer is effective, is almost constant. Therefore, it is preferable that the covalent organic framework be supported on the surface of the conductor material at a thin film thickness at which it is easy to transfer the electrons.

Moreover, in the hybrid material in this embodiment, a preferable elemental composition ratio of the covalent organic framework with respect to the conductor material is 0.005 to 1, and does not depend on a type of the conductor material. That is to say, it is conceivable that, in a case where a specific surface area of the conductor material is smaller than in this example, the range of the composition ratio moves to a direction of shifting to a smaller value as a whole, and it is conceivable that, on the contrary, in a case where the specific surface area is larger than in this example, the range of the composition ratio moves to a direction of shifting to a larger value as a whole.

However, in the present state, a condition of "CTF/carbon support = 0.011" described in Example 2-7 is nearly a detection limit of the XPS, and it is impossible to quantitate a value smaller than this value. Moreover, with regard to the carbon support for use in this example, a BET specific surface area thereof is 1270 m²/g, which is a value substantially largest among those of conductive porous supports, and accordingly, in the present state, there is hardly a conductive porous support that has a larger value of the BET specific surface area that this.

As seen from the above, the preferable elemental composition ratio of the covalent organic framework with respect to the conductor material, the elemental composition ratio not depending on the type of the conductor material, is 0.005 to 1.

The examples described above verify that the electrically conductive hybrid material of this embodiment provides excellent electrical conductivity by supporting the covalent organic framework on the conductor material such as a carbon material, and can be fully used as an electrode material and the like.

The description has been made above of the contents of this embodiment along the examples; however, it is self-obvious for those skilled in the art that this embodiment is not limited to the description of these, and is modifiable and improvable in various ways.

### INDUSTRIAL APPLICABILITY

In accordance with this embodiment, the covalent organic framework that does not have electron conductivity by itself is supported on the conductor material such as a carbon material, thereby can be given the electron conductivity, and becomes usable as such a catalyst material and such an electrode material, which involve the electron transfer, these materials including an electrode catalyst material of a fuel cell, and the like.

Moreover, in order to enhance the activity per unit weight of platinum or other platinum group elements, it is effective to reduce a particle diameter of the metal to be supported, and to increase a ratio of metal that enables effective electron transfer. Then, the electrically conductive hybrid material of this embodiment can disperse the metal in a monoatomic state. Therefore, a surface area of the metal per unit metal amount is increased, and the electrons can further transfer in a high ratio from the covalent organic framework to the conductor material. Therefore, it becomes possible to enhance catalytic activity per unit supported amount of metal.

When the electrically conductive hybrid material is modified by platinum, then even in a case where methanol is present, oxygen is selectively reduced, and the electrically conductive hybrid material is less likely to exhibit methanol oxidation reaction activity. Therefore, the electrically conductive hybrid material modified by the platinum group element is extremely useful as a material in a fuel cell using methanol and the like.

Moreover, in comparison with the existing bulk inorganic material that includes, as a base, metal or a carbon material, which has electron conductivity, monomer molecules which compose the covalent organic framework are changed in various ways, whereby molecular design of the structure itself can be carried out with ease in response to desired characteristics and the like. Moreover, the covalent organic framework has an advantage of being inexpensive since the covalent organic framework is composed of only organic matter.

## Claims

1. An electrically conductive hybrid material comprising:
a covalent organic framework having meso-sized or micro-sized pores, the covalent organic framework being a polymer having a structure in which same or different plural aromatic cyclic groups form a cyclic repeating unit by a covalent bond; and
a conductor material,
wherein the covalent organic framework is supported on the conductor material, and
wherein the conductor material is a carbon material having a form of nanoparticles, the carbon material has a particle diameter of 10 nm to 300 nm, and the particle diameter of the carbon material is obtained by observing the electrically conductive hybrid material by a scanning electron microscope.

2. The electrically conductive hybrid material according to claim 1, wherein the covalent organic framework is a polymer composed of repeating units having plural triazine rings in a molecule.

3. The electrically conductive hybrid material according to claim 1, wherein the covalent organic framework has a structure in which plural triazine rings are bonded to one another by the covalent bond through arylene, hetero arylene or hetero atoms.

4. The electrically conductive hybrid material according to claim 1, wherein the covalent organic framework has a structure in which plural triazine rings are bonded to one another by the covalent bond through phenylene or pyridylene.

5. The electrically conductive hybrid material according to claim 4, wherein the covalent organic framework is a compound obtained by a condensation reaction of dicyanobenzene or dicyanopyridine.

6. The electrically conductive hybrid material according to any one of claims 1 to 5, wherein the covalent organic framework is a compound obtained by an in-situ reaction of polymerizing monomers on the conductor material.

7. The electrically conductive hybrid material according to claim 1, wherein the covalent organic framework is at least one compound selected from the following group: 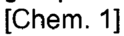 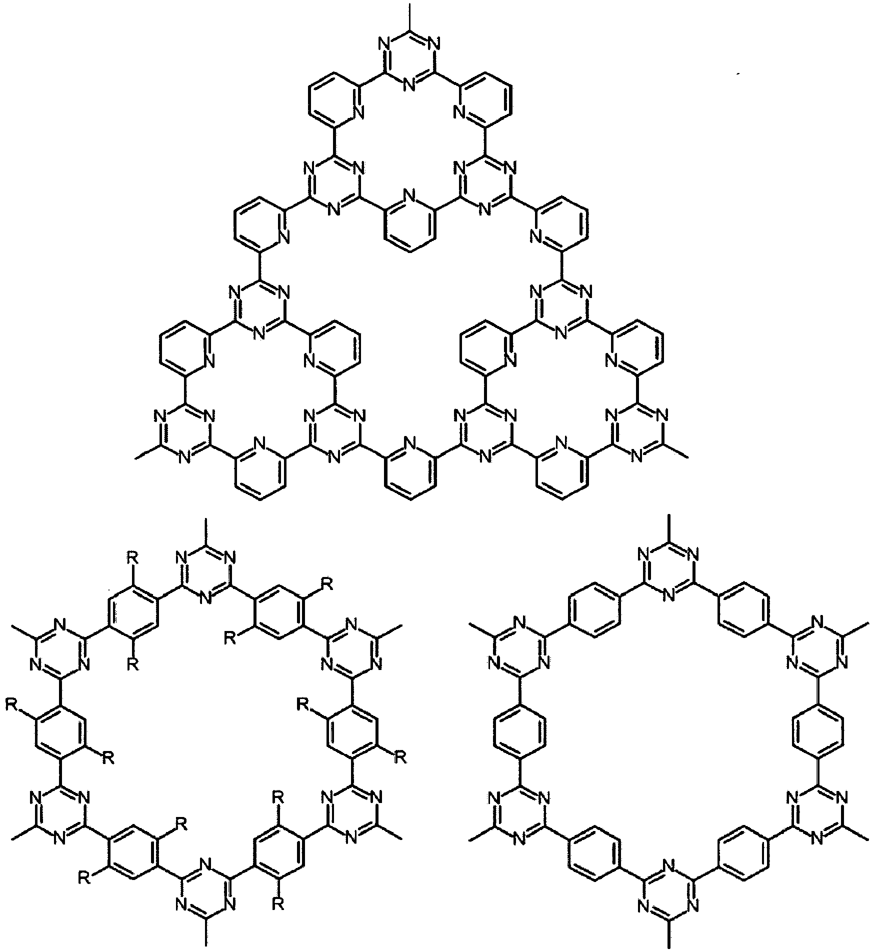 [where R is alkyl.]

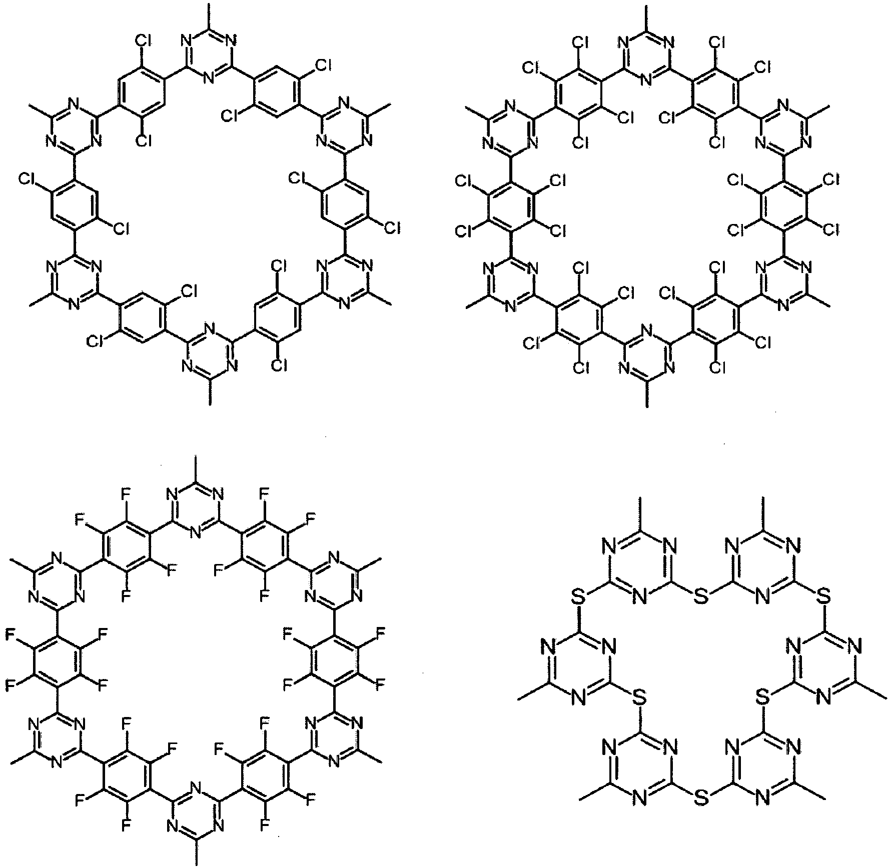

8. The electrically conductive hybrid material according to any one of claims 1 to 7, wherein the carbon material is at least one selected from the group consisting of graphite, carbon black, Ketjen Black, acetylene black, carbon nanotube, graphene and carbon fiber.

9. The electrically conductive hybrid material according to any one of claims 1 to 8, wherein metal is coordinated to the covalent organic framework.

10. The electrically conductive hybrid material according to claim 9, wherein the metal is a platinum group element or copper.

11. An electrode comprising the electrically conductive hybrid material according to any one of claims 1 to 10.

12. A catalyst comprising the electrically conductive hybrid material according to any one of claims 1 to 10.

13. A hydrogen generation catalyst comprising the catalyst according to claim 12, wherein the platinum group element is coordinated to the covalent organic framework.

14. The hydrogen generation catalyst according to claim 13, wherein an elemental composition ratio of the covalent organic framework with respect to the conductor material is 0.005 to 1.

15. A hydrogen oxidation catalyst comprising the catalyst according to claim 12, wherein the platinum group element is coordinated to the covalent organic framework.

16. The hydrogen oxidation catalyst according to claim 15, wherein an elemental composition ratio of the covalent organic framework with respect to the conductor material is 0.005 to 1.

17. An oxygen reduction catalyst comprising the catalyst according to claim 12, wherein the conductor material is a carbon material.

## Patentansprüche

1. Elektrisch leitfähiges Hybridmaterial, umfassend:
ein kovalentes organisches Gerüst mit Meso- oder Mikroporen, wobei das kovalente organische Gerüst ein Polymer mit einer Struktur ist, worin gleiche oder unterschiedliche mehrfache aromatische cyclische Gruppen eine cyclische wiederkehrende Einheit mittels einer kovalenten Bindung bilden, und
ein Leitermaterial,
wobei das kovalente organische Gerüst auf dem Leitermaterial getragen wird, und
wobei das Leitermaterial ein Kohlenstoffmaterial mit einer Form von Nanoteilchen ist, wobei das Kohlenstoffmaterial einen Teilchendurchmesser von 10 nm bis 300 nm aufweist, und der Teilchendurchmesser des Kohlenstoffmaterials durch Untersuchen des elektrisch leitfähigen Hybridmaterials mittels eines Rasterelektronenmikroskops erhalten wird.

2. Elektrisch leitfähiges Hybridmaterial gemäß Anspruch 1, wobei das kovalente organische Gerüst ein Polymer, aufgebaut aus wiederkehrenden Einheiten mit mehreren Triazinringen in einem Molekül, ist.

3. Elektrisch leitfähiges Hybridmaterial gemäß Anspruch 1, wobei das kovalente organische Gerüst eine Struktur aufweist, worin mehrere Triazinringe miteinander durch die kovalente Bindung über Arylene, Heteroarylene oder Heteroatome gebunden sind.

4. Elektrisch leitfähiges Hybridmaterial gemäß Anspruch 1, wobei das kovalente organische Gerüst eine Struktur aufweist, worin mehrere Triazinringe miteinander durch die kovalente Bindung über Phenylen oder Pyridylen gebunden sind.

5. Elektrisch leitfähiges Hybridmaterial gemäß Anspruch 4, wobei das kovalente organische Gerüst eine Verbindung, erhalten durch eine Kondensationsreaktion von Dicyanobenzol oder Dicyanopyridin, ist.

6. Elektrisch leitfähiges Hybridmaterial gemäß einem der Ansprüche 1 bis 5, wobei das kovalente organische Gerüst eine Verbindung ist, erhalten durch eine in-situ-Reaktion des Polymerisierens von Monomeren auf dem Leitermaterial.

7. Elektrisch leitfähiges Hybridmaterial gemäß Anspruch 1, wobei das kovalente organische Gerüst mindestens eine Verbindung ist, ausgewählt aus der folgenden Gruppe: 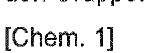 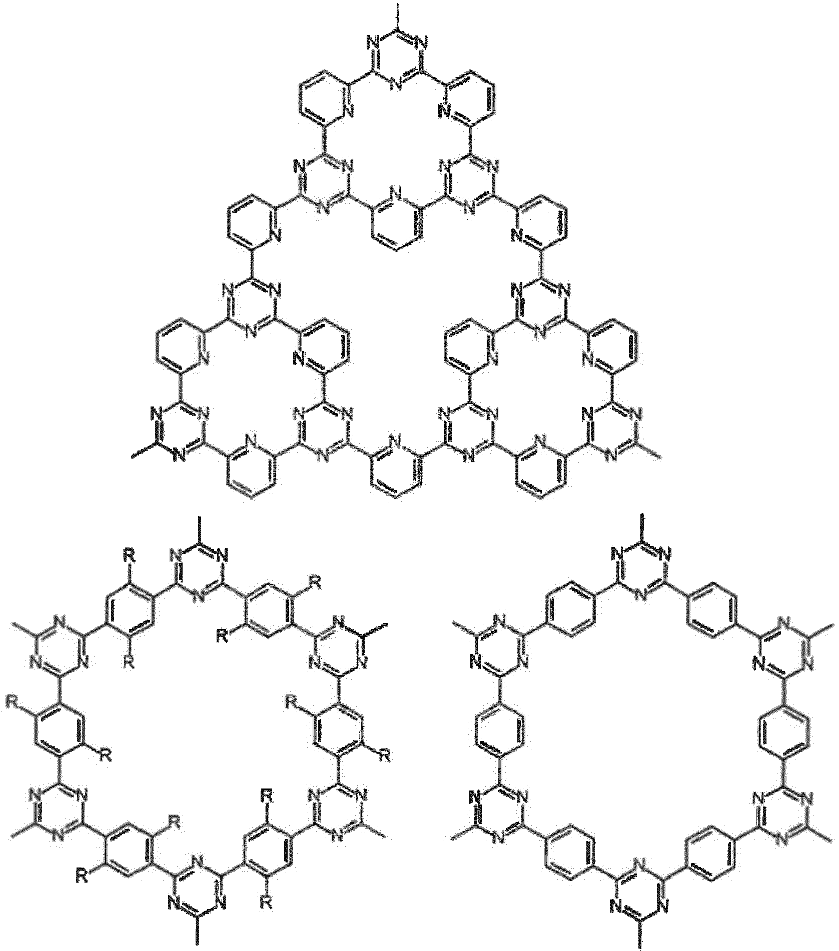 [worin R Alkyl ist.]

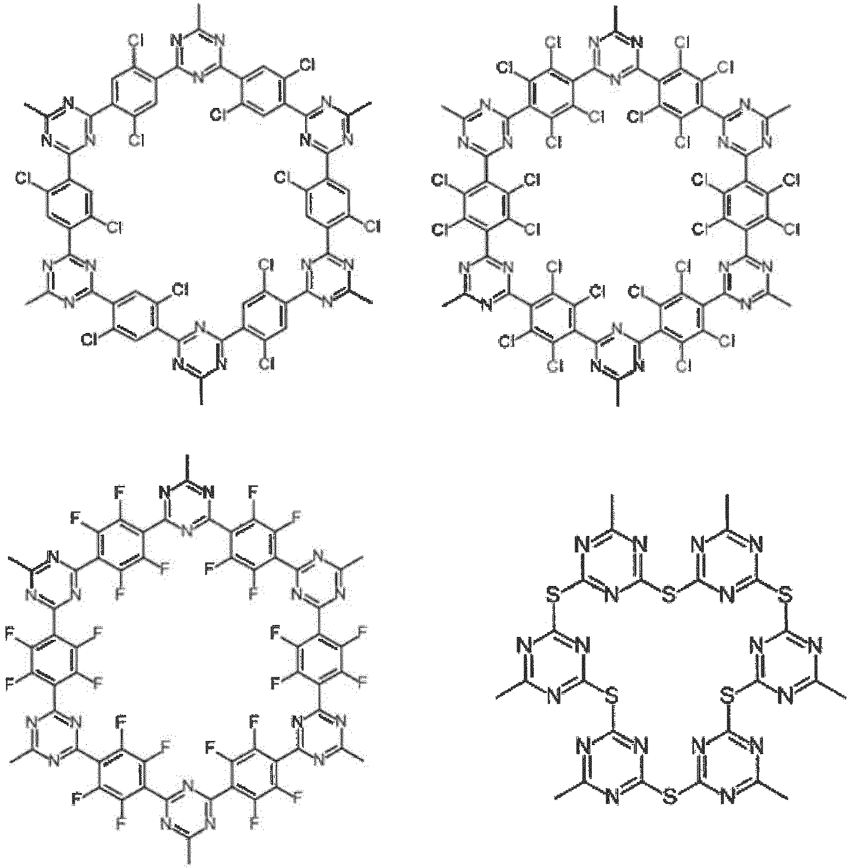

8. Elektrisch leitfähiges Hybridmaterial gemäß einem der Ansprüche 1 bis 7, wobei das Kohlenstoffmaterial mindestens eines ist, ausgewählt aus der Gruppe, bestehend aus Graphit, Ruß, Ketjen Black, Acetylenruß, Kohlennanoröhre, Graphen oder Kohlenstofffaser.

9. Elektrisch leitfähiges Hybridmaterial gemäß einem der Ansprüche 1 bis 8, wobei Metall an das kovalente organische Gerüst koordiniert ist.

10. Elektrisch leitfähiges Hybridmaterial gemäß Anspruch 9, wobei das Metall ein Platingruppenelement oder Kupfer ist.

11. Elektrode, umfassend das elektrisch leitfähige Hybridmaterial gemäß einem der Ansprüche 1 bis 10.

12. Katalysator, umfassend das elektrisch leitfähige Hybridmaterial gemäß einem der Ansprüche 1 bis 10.

13. Wasserstofferzeugungskatalysator, umfassend den Katalysator gemäß Anspruch 12, wobei das Platingruppenelement an das kovalente organische Gerüst koordiniert ist.

14. Wasserstofferzeugungskatalysator gemäß Anspruch 13, wobei ein Elementzusammensetzungsverhältnis des kovalenten organische Gerüsts bezüglich des Leitermaterials 0,005 bis 1 ist.

15. Wasserstoffoxidationskatalysator, umfassend den Katalysator gemäß Anspruch 12, wobei das Platingruppenelement an das kovalente organische Gerüst koordiniert ist.

16. Wasserstoffoxidationskatalysator gemäß Anspruch 15, wobei ein Elementzusammensetzungsverhältnis des kovalenten organischen Gerüsts bezüglich des Leitermaterials 0,005 bis 1 ist.

17. Oxidationsreduktionskatalysator, umfassend den Katalysator gemäß Anspruch 12, wobei das Leitermaterial ein Kohlenstoffmaterial ist.

## Revendications

1. Matériau hybride conducteur de l'électricité, comprenant :
une structure organique covalente présentant des pores mésométriques et micrométriques, la structure organique covalente étant un polymère ayant une structure dans laquelle plusieurs groupes cycliques aromatiques identiques ou différents forment une unité récurrente cyclique par liaison covalente, et
un matériau conducteur,
où le matériau conducteur supporte la structure organique covalente, et
où le matériau conducteur est un matériau carboné sous forme de nanoparticles, le matériau carboné ayant un diamètre des particules allant de 10 nm à 300 nm, le diamètre des particules du matériau carboné étant obtenu par microscopie électronique à balayage du matériau hybride conducteur de l'électricité.

2. Matériau hybride conducteur de l'électricité selon la revendication 1, où la structure organique covalente est un polymère composé d'unités récurrentes ayant plusieurs cycles triazine par molécule.

3. Matériau hybride conducteur de l'électricité selon la revendication 1, où la structure organique covalente présente une structure, dans laquelle plusieurs cycles triazine sont liés les uns aux autres par une liaison covalente via des atomes d'arylène, d'hétéroarylène ou hétéro.

4. Matériau hybride conducteur de l'électricité selon la revendication 1, où la structure organique covalente a une structure dans laquelle plusieurs cycles triazine sont liés les uns aux autres par liaison covalente via un phénylène ou un pyridylène.

5. Matériau hybride conducteur de l'électricité selon la revendication 4, où la structure organique covalente est un composé obtenu par une réaction de condensation de dicyanobenzène ou de dicyanopyridine.

6. Matériau hybride conducteur de l'électricité selon l'une quelconque des revendications 1 à 5, où la structure organique covalente est un composé obtenu par une réaction in situ de polymérisation de monomères sur le matériau conducteur.

7. Matériau hybride conducteur de l'électricité selon la revendication 1, où la structure organique covalente est au moins un composé choisi parmi le groupe suivant : 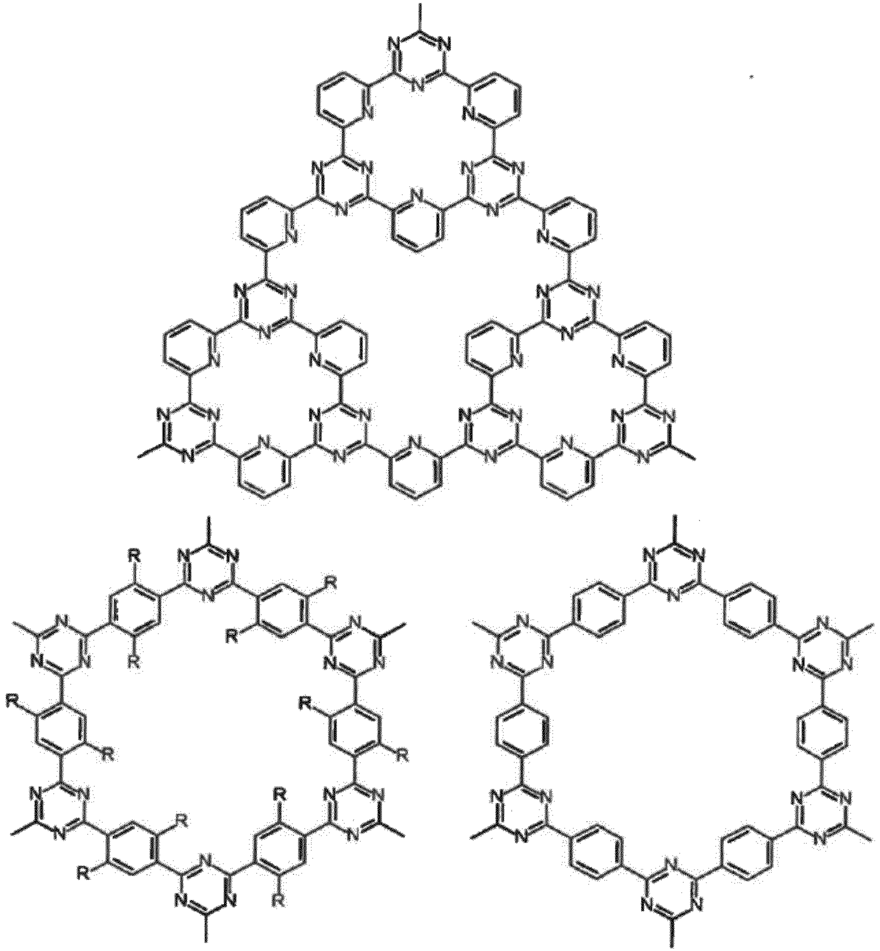 où R est alkyle,

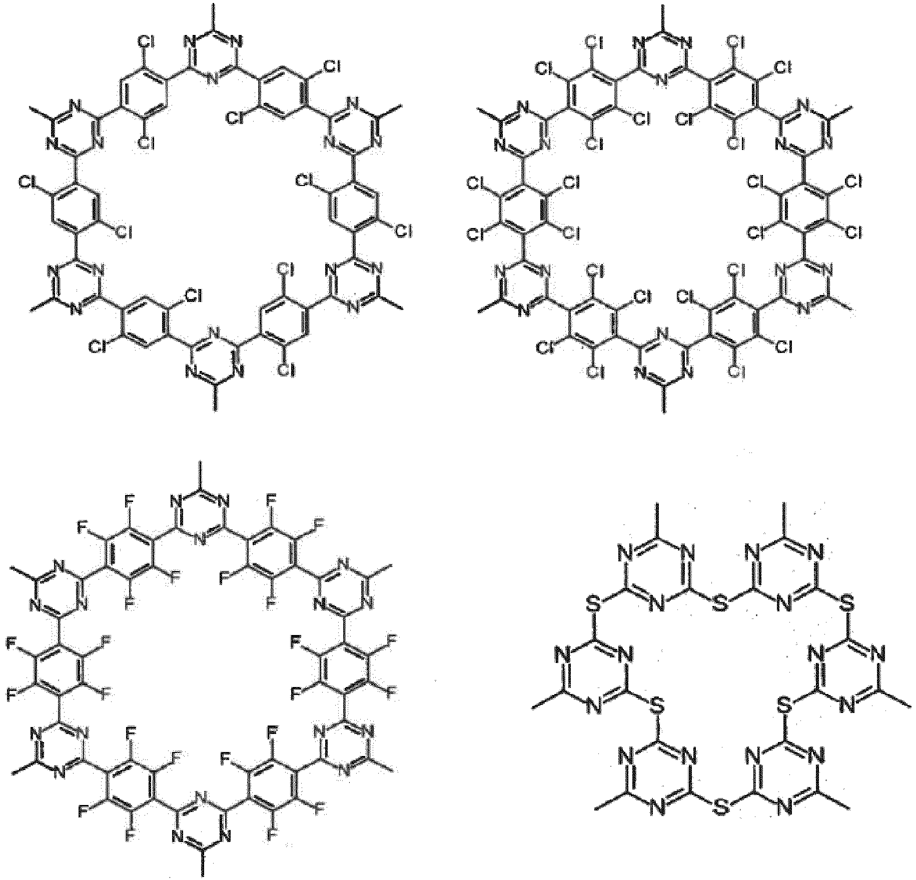

8. Matériau hybride conducteur de l'électricité selon l'une quelconque des revendications 1 à 7, où le matériau carboné est au moins l'un choisi parmi le groupe consistant en du graphite, du noir de carbone, du noir de Ketjen, du noir d'acétylène, du carbone en nanotubes, du graphène et des fibres de carbone.

9. Matériau hybride conducteur de l'électricité selon l'une quelconque des revendications 1 à 8, où le métal est coordiné à la structure organique covalente.

10. Matériau hybride conducteur de l'électricité selon la revendication 9, où le métal est un élément du groupe du platine ou le cuivre.

11. Électrode comprenant le matériau hybride conducteur de l'électricité selon l'une quelconque des revendications 1 à 10.

12. Catalyseur comprenant le matériau hybride conducteur de l'électricité selon l'une quelconque des revendications 1 à 10.

13. Catalyseur de génération d'hydrogène comprenant le catalyseur selon la revendication 12, où l'élément du groupe du platine est coordiné à la structure organique covalente.

14. Catalyseur de génération d'hydrogène selon la revendication 13, où le rapport de composition élémentaire de la structure organique covalente au matériau conducteur se situe dans l'intervalle allant de 0,005 à 1.

15. Catalyseur d'oxydation d'hydrogène comprenant le catalyseur selon la revendication 12, où l'élément du groupe du platine est coordiné à la structure organique covalente.

16. Catalyseur d'oxydation d'hydrogène selon la revendication 15, où le rapport de composition élémentaire de la structure organique covalente au matériau conducteur se situe dans l'intervalle allant de 0,005 à 1.

17. Catalyseur de réduction d'oxygène comprenant le catalyseur selon la revendication 12, où le matériau conducteur est un matériau carboné.
